# EUROPEAN PATENT APPLICATION

(11) **EP 4 099 004 A1**
(43) Date of publication of application: **07.12.2022**
(21) Application number: 20916681.8
(22) Date of filing: 10.12.2020
(51) Int. Cl.: G01N 23/04, B07C 5/346, B65G 15/22, B65G 21/00, G01N 23/10

(54) **TRANSPORT DEVICE AND RADIATION INSPECTION SYSTEM**

(30) Priority: 27.01.2020 JP 2020010836; 15.06.2020 JP 2020103050
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: MINAMINO, Yuhi, Kawasaki-shi, Kanagawa 212-0013 (JP)
(74) Representative: Horn Kleimann Waitzhofer Patentanwälte PartG mbB
(86) International application number: PCT/JP2020/046056
(87) International publication number: WO 2021/153026

(57) **Abstract**

According to the embodiment, a conveyance apparatus includes an upstream-side conveyance portion and a downstream-side conveyance portion. The upstream-side conveyance portion is configured to convey a test object from a conveyance direction deviating with respect to a conveyance direction of a conveyance path of a radiation inspection apparatus to the conveyance path. The radiation inspection apparatus is configured to irradiate the test object with radiation to inspect the test object. The downstream-side conveyance portion is configured to convey the test object from the conveyance path in a conveyance direction deviating with respect to the conveyance direction of the conveyance path. The upstream-side conveyance portion and the downstream-side conveyance portion respectively include a shielding section that is on an extension line of the conveyance direction of the conveyance path and is configured to block the radiation.

## Description

### FIELD

Embodiments of the present invention relate to a conveyance apparatus and a radiation inspection system used when a package is put in a radiation inspection apparatus and/or a package is taken out from the radiation inspection apparatus.

### BACKGROUND

Packages of various sizes, shapes, and weights such as mails are sometimes checked through a radiation inspection apparatus such as an X-ray inspection apparatus. When a package is put in the radiation inspection apparatus, the package is put in the radiation inspection apparatus by pushing away, a conveying force of a conveyor of the radiation inspection apparatus, an obstacle such as a radiation protection curtain that prevents radiation from leaking from the radiation inspection apparatus with. When a package is taken out from the radiation inspection apparatus, the package is taken out from the radiation inspection apparatus by pushing away the obstacle such as the radiation protection curtain with the conveying force of the conveyor of the radiation inspection apparatus.

### CITATION LIST

### Patent Literature

[Patent Document 1] Jpn. Pat. Appln. KOKAI Publication No. 2019-109979
[Patent Document 2] Jpn. Pat. Appln. KOKAI Publication No. 2004-69385

### SUMMARY

### TECHNICAL PROBLEM

An object of the present invention is to provide a conveyance apparatus and a radiation inspection system capable of preventing a package from staying in an entrance or an exit of a radiation inspection apparatus such as an X-ray inspection apparatus.

### SOLUTION TO PROBLEM

According to an embodiment, a conveyance apparatus includes an upstream-side conveyance portion and a downstream-side conveyance portion. The upstream-side conveyance portion is configured to convey a test object from a conveyance direction deviating with respect to a conveyance direction of a conveyance path of a radiation inspection apparatus to the conveyance path. The radiation inspection apparatus is configured to irradiate the test object with radiation to inspect the test object. The downstream-side conveyance portion is configured to convey the test object from the conveyance path in a conveyance direction deviating with respect to the conveyance direction of the conveyance path. The upstream-side conveyance portion and the downstream-side conveyance portion respectively include a shielding section that is on an extension line of the conveyance direction of the conveyance path and is configured to block the radiation.

### BRIEF DESCRIPTION OF THE DRAWINGS

FIG. 1 is a schematic diagram illustrating a package processing system according to a first embodiment to a fifth embodiment.
FIG. 2 is a schematic diagram illustrating a radiation inspection area including a first conveyance portion on an upstream side, a radiation inspection system, and a second conveyance portion on a downstream side in the package processing system according to the first embodiment.
FIG. 3 is a schematic diagram illustrating a state in which the first conveyance portion on the upstream side, the radiation inspection system, and the second conveyance portion on the downstream side are operated in the package processing system from a state illustrated in FIG. 2.
FIG. 4 is a schematic diagram illustrating a state in which the first conveyance portion on the upstream side, the radiation inspection system, and the second conveyance portion on the downstream side are operated in the package processing system from the state illustrated in FIG. 3.
FIG. 5 is a schematic diagram illustrating a state in which the first conveyance portion on the upstream side, the radiation inspection system, and the second conveyance portion on the downstream side are operated in the package processing system from the state illustrated in FIG. 4.
FIG. 6 is a schematic diagram illustrating a state in which the first conveyance portion on the upstream side, the radiation inspection system, and the second conveyance portion on the downstream side are operated in the package processing system from the state illustrated in FIG. 5.
FIG. 7 is a schematic perspective view illustrating the first conveyance portion on the upstream side and the radiation inspection system in the package processing system according to the first embodiment.
FIG. 8 is a flowchart for explaining an operation for pushing a package into a protection curtain (an obstacle) of a radiation inspection apparatus of the radiation inspection system of the package processing system according to the first embodiment.
FIG. 9 is a schematic diagram illustrating a state in which the radiation inspection apparatus of the package processing system according to the first embodiment is viewed from the upstream side to the downstream side along an X-axis.
FIG. 10 is a schematic diagram illustrating the radiation inspection area including the first conveyance portion on the upstream side, the radiation inspection system, and the second conveyance portion on the downstream side in the package processing system according to a first modification of the first embodiment.
FIG. 11 is a schematic diagram illustrating a state in which the first conveyance portion on the upstream side, the radiation inspection system, and the second conveyance portion on the downstream side are operated in the package processing system from a state illustrated in FIG. 10.
FIG. 12 is a schematic diagram illustrating a state in which the first conveyance portion on the upstream side, the radiation inspection system, and the second conveyance portion on the downstream side are operated in the package processing system from the state illustrated in FIG. 11.
FIG. 13 is a schematic diagram illustrating a state in which the first conveyance portion on the upstream side, the radiation inspection system, and the second conveyance portion on the downstream side are operated in the package processing system from the state illustrated in FIG. 12.
FIG. 14 is a flowchart for explaining an operation for pushing a package into the protection curtain (the obstacle) of the radiation inspection apparatus of the radiation inspection system of the package processing system according to the first modification of the first embodiment.
FIG. 15 is a schematic diagram illustrating a radiation inspection area including a first conveyance portion on an upstream side, a radiation inspection system, and a second conveyance portion on a downstream side in a package processing system according to a second embodiment.
FIG. 16 is a schematic perspective view illustrating the first conveyance portion on the upstream side and the radiation inspection system in the package processing system according to the second embodiment.
FIG. 17 is a schematic diagram illustrating a state in which the first conveyance portion on the upstream side, the radiation inspection system, and the second conveyance portion on the downstream side are operated in the package processing system according to the second embodiment.
FIG. 18 is a schematic enlarged view of a position indicated by a sign XVIII in FIG. 17.
FIG. 19 is a schematic diagram of a radiation inspection area including a first conveyance portion on an upstream side, a radiation inspection system, and a second conveyance portion on a downstream side in a package processing system according to a third embodiment.
FIG. 20 is a schematic diagram illustrating a state in which the first conveyance portion on the upstream side, the radiation inspection system, and the second conveyance portion on the downstream side are operated in the package processing system from a state illustrated in FIG. 19.
FIG. 21 is a schematic diagram illustrating a state in which the first conveyance portion on the upstream side, the radiation inspection system, and the second conveyance portion on the downstream side are operated in the package processing system from the state illustrated in FIG. 20.
FIG. 22 is a schematic diagram illustrating the radiation inspection area including the first conveyance portion on the upstream side, the radiation inspection system, and the second conveyance portion on the downstream side in the package processing system according to a first modification of the third embodiment.
FIG. 23 is a schematic perspective view illustrating a first conveyance portion on an upstream side, a radiation inspection system, and a second conveyance portion on a downstream side in a package processing system according to a fourth embodiment.
FIG. 24 is a schematic diagram illustrating a first conveyance portion on an upstream side, a radiation inspection system, and a second conveyance portion on a downstream side in a package processing system according to a fifth embodiment.
FIG. 25 is a schematic diagram illustrating the first conveyance portion on the upstream side, the radiation inspection system, and the second conveyance portion on the downstream side in the package processing system according to a first modification of the fifth embodiment.
FIG. 26 is a schematic diagram illustrating the first conveyance portion on the upstream side, the radiation inspection system, and the second conveyance portion on the downstream side in the package processing system according to a second modification of the fifth embodiment.
FIG. 27 is a schematic diagram illustrating the first conveyance portion on the upstream side, the radiation inspection system, and the second conveyance portion on the downstream side in the package processing system according to a third modification of the fifth embodiment.
FIG. 28 is a schematic diagram illustrating the first conveyance portion on the upstream side, the radiation inspection system, and the second conveyance portion on the downstream side in the package processing system according to a fourth modification of the fifth embodiment.

### DETAILED DESCRIPTION

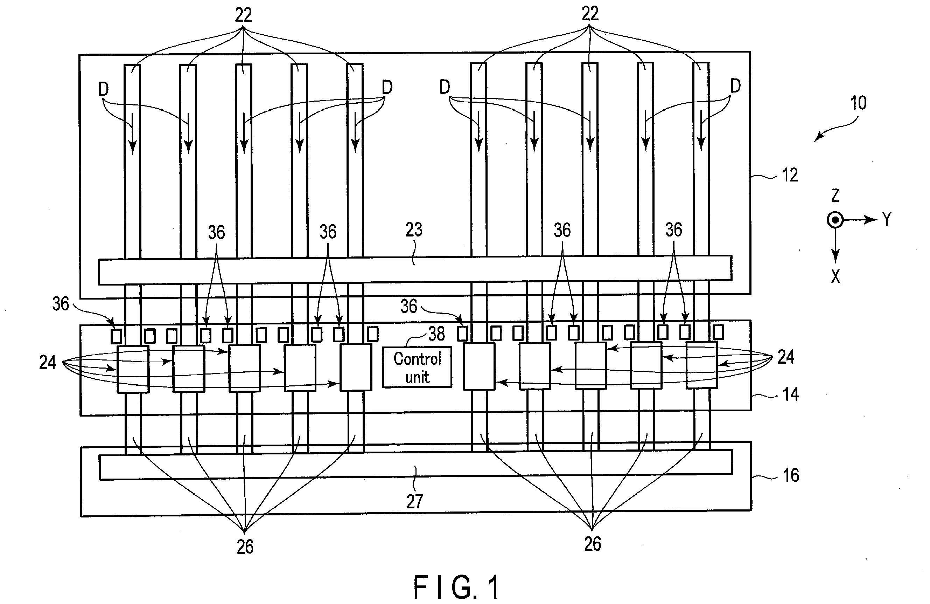

A conveyance assisting apparatus 34 of a radiation inspection system 24 according to a first embodiment is explained with reference to FIGS. 1 to 9.

As illustrated in FIG. 1, radiation inspection systems 24 according to the present embodiment are used as a part of a package processing system 10 that processes a package such as a mail. The package processing system 10 includes, for example, a package registration area 12, a radiation inspection area 14, and a post-inspection conveyance area 16. Although not illustrated, a package collection area can be present upstream of the package registration area 12. On an upstream side of the radiation inspection area 14, there the package registration area 12. On a downstream side of the radiation inspection area 14, there is the post-inspection conveyance area 16.

Here, in order to simplify explanation, it is assumed that a package conveyance direction D has a linear shape parallel to a floor surface. An X-axis is taken along the package conveyance direction D, a Z-axis is taken in the vertical direction, and a Y-axis is taken in a direction orthogonal to the X-axis and the Z-axis.

The package registration area 12 includes a plurality of first conveyance portions (upstream-side conveyance portions) 22. The first conveyance portions 22 are present across the package registration area 12 and the radiation inspection area 14 of the package processing system 10.

For example, the package processing system 10 photographs packages and performs weight measurement on a plurality of first conveyance portions 22 in the package registration area 12. In the package registration area 12, the package processing system 10 specifies, for example, information concerning the size, shape, and weight of packages (test objects) to be conveyed from the package registration area 12 to the radiation inspection systems 24, information concerning the order of the packages to be conveyed to the radiation inspection systems 24, and the like. That is, in the package registration area 12, the packages are recognized and registered by the package processing system 10.

In the package registration area 12, the packages are movable from certain first conveyance portions 22 to different first conveyance portions 22 by a conveyance portion 23 crossing the first conveyance portions 22.

The radiation inspection area 14 includes, on the downstream side of the first conveyance portions 22, the radiation inspection systems 24 that inspect the insides of the packages using radiation such as X-rays.

The radiation inspection area 14 includes a plurality of second conveyance portions (downstream-side conveyance portions) 26 in addition to the plurality of first conveyance portions 22. The radiation inspection systems 24 are provided between the second conveyance portions 26 on the downstream side and the first conveyance portions 22 on the upstream side. The first conveyance portions 22 and the second conveyance portions 26 can be parts of the radiation inspection systems 24.

The second conveyance portions 26 are present across the radiation inspection area 14 and the post-inspection conveyance area 16 of the package processing system 10. The second conveyance portions 26 convey the packages to the post-inspection conveyance area 16. In the post-inspection conveyance area 16, the packages are movable from certain second conveyance portions 26 to different second conveyance portions 26 by the conveyance portion 27 crossing the second conveyance portions 26 In the post-inspection conveyance area 16, for example, for a package, one second conveyance portion 26 is selected from the plurality of second conveyance portions 26 for each destination. The destination includes not only places but also equipment for package rechecking.

The first conveyance portion 22 and the second conveyance portion 26 are preferably connected to a control portion 38 explained below by wire communication or wireless communication. The control portion 38 controls speeds of conveyance surfaces of the first conveyance portion 22 and the second conveyance portion 26. The control portion 38 preferably controls moving speed of the conveyance surface of the second conveyance portion 26 to be higher than moving speed of a conveyance surface 45 of a conveyor 44 of a radiation inspection apparatus 32 explained below.

As the first conveyance portion 22 and the second conveyance portion 26, various conveyors such as a roller conveyor and a belt conveyor can be used.

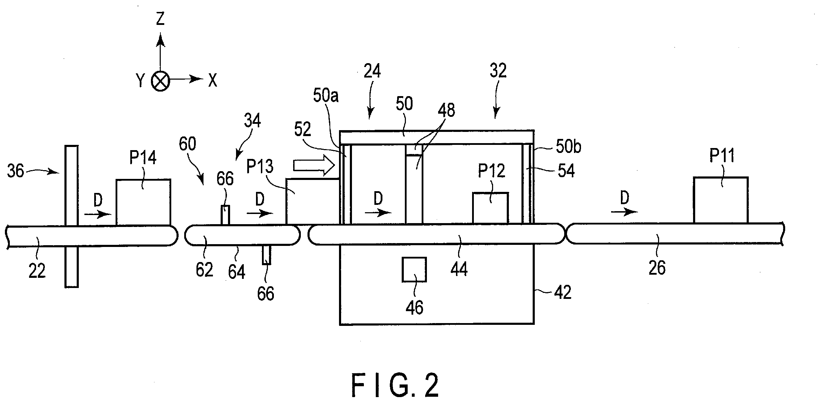

As illustrated in FIGS. 2 to 6, the radiation inspection system 24 includes the radiation inspection apparatus 32, a conveyance assisting apparatus 34 disposed on the upstream side with respect to the radiation inspection apparatus 32, a package detection apparatus (a sensor unit) 36 disposed in the vicinity of a downstream-side end portion further on the upstream side than the downstream-side end portion of the first conveyance portion 22, and the control portion 38. The sizes of packages P11, P12, P13, P14, and P15 in FIGS. 2 to 6 may be the same or may be different.

As the radiation inspection apparatus 32 in the present embodiment, a known radiation inspection apparatus can be used as appropriate. An example of the radiation inspection apparatus 32 is an X-ray inspection apparatus. In general, the radiation inspection apparatus 32 includes a base 42, a conveyor 44 that conveys a package in a predetermined direction D with respect to the base 42, a radiation generator 46, a line sensor 48, a shielding box (a tunnel) 50 that blocks radiation, and protection curtains (obstacles) 52 and 54 that protect a package from radiation.

The base 42 is set on a floor surface or is movably fixed to the floor surface by casters or the like. In order to prevent radiation from leaking to the outside, the base 42 is formed of, for example, a plurality of layers of iron plates having appropriate thickness.

The shielding box 50 is formed in a tunnel shape on the upper side of the base 42. The shielding box 50 cooperates with the base 42 to form an exterior of the radiation inspection apparatus 32. The shielding box 50 is formed of, for example, a plurality of layers of iron plates having an appropriate thickness in order to prevent radiation from leaking to the outside. The conveyor 44 of the radiation inspection apparatus 32 is disposed to pass through an entrance 50a and an exit 50b of the tunnel-shaped shielding box 50. The entrance 50a of the shielding box 50 is also an entrance of the radiation inspection apparatus 32 and the exit 50b of the shielding box 50 is also an exit of the radiation inspection apparatus 32. The conveyor 44 of the radiation inspection apparatus 32 is formed of, for example, a rubber material or a resin material as an endless belt. The conveyance direction D of the conveyance surface 45 of the conveyor 44 is determined in a predetermined direction. The upstream-side end portion of the conveyor 44 of the radiation inspection apparatus 32 is present further on the upstream side of the entrance 50a of the shielding box 50. The downstream-side end portion of the conveyor 44 of the radiation inspection apparatus 32 is further on the downstream side of the exit 50b of the shielding box 50. Accordingly, the upstream-side end portion and the downstream-side end portion of the conveyor 44 project to the outer side from the base 42 and the shielding box 50.

The line sensor 48 that detects radiation is disposed on, for example, a ceiling and an inner wall of the shielding box 50. The line sensor 48 extends in a direction orthogonal to the conveyance direction D.

The radiation generator 46 is disposed, for example, on the base 42. The radiation generator 46 emits radiation such as X-rays toward the conveyor 44 and the line sensor 48 when a test object is inspected. The radiation inspection apparatus 32 obtains an image of content of a package with the line sensor 48.

The entrance 50a of the shielding box 50 is formed as, for example, a substantially rectangular opening in cooperation with the conveyance surface 45 of the conveyor 44. A protection curtain (an upstream-side obstacle) 52 is hung on the entrance 50a of the shielding box 50. Strips 52a of the protection curtain 52 continue between the upper end of the entrance 50a and the conveyance surface 45 of the conveyor 44. The lower ends of the strips 52a are preferably in slight contact with the conveyance surface 45 of the conveyor 44. The protection curtain 52 is hung from the upper edge of the entrance 50a of the shielding box 50 and includes a plurality of strips (flaps) 52a having a radiation blocking function. The plurality of strips 52a of the protection curtain 52 are arranged without a gap in a Y-axis direction orthogonal to the conveyance direction (an X-axis direction) D. The protection curtain 52 prevents radiation generated from the radiation generator 46 from directly leaking to the outside of the shielding box 50 through the entrance 50a and prevents the radiation reflected by a package or the inner wall of the shielding box 50 from leaking to the outside of the shielding box 50 through the entrance 50a.

The strips 52a of the protection curtain 52 are formed of, for example, a plate made of lead rubber in which powdered lead is dispersed in a rubber material. As the protection curtain 52, a metal material exhibiting a radiation shielding effect such as SUS or tungsten can be used instead of lead. In any case, since the strips 52a of the protection curtain 52 need to perform blocking of radiation, the strips 52a are heavier than a curtain simply made of a rubber plate material or the like containing no lead or the like.

The exit 50b of the shielding box 50 is formed, for example, as a substantially rectangular opening in cooperation with the conveyance surface 45 of the conveyor 44. A protection curtain (a downstream-side obstacle) 54 is hung at the upper edge of the exit 50b of the shielding box 50. The protection curtain 54 is formed similarly to the protection curtain 52.

The control portion 38 is connected to the conveyance assisting apparatus 34 and the package detection apparatus 36 by wire communication or wireless communication. The control portion 38 is capable of controlling the conveyance assisting apparatus 34 and the package detection apparatus 36 as appropriate. The control portion 38 is present, for example, in the radiation inspection area 14. The control portion 38 may be disposed on the outer side of the radiation inspection area 14. In FIG. 1, the control portion 38 is depicted as one in the radiation inspection area 14, However, in the present embodiment, the radiation inspection systems 24 are explained as including control portions 38.

In the control portion 38, for example, a CPU develops, in a RAM, a control program stored in a memory such as a ROM and executes the control program. The control portion 38 can also be realized by processing for supplying a program to the conveyance assisting apparatus 34 and the package detection apparatus 36 via a network and one or more processors in computers of the conveyance assisting apparatus 34 and the package detection apparatus 36 reading and executing the program. The control of the control portion 38 can also be implemented by a circuit (for example, ASIC) that implements one or more functions.

The conveyance assisting apparatus 34 includes a push-in section (a push-in mechanism) 60 that pushes a package to the protection curtain 52. The push-in section 60 includes an auxiliary conveyor on the upstream side (an auxiliary conveyor portion) 62 having a conveyance surface (an upstream-side conveyance surface) 64 and one or a plurality of protrusions (push-in sections) 66 provided on the conveyance surface 64 of the auxiliary conveyor 62. The auxiliary conveyor 62 is formed as an endless belt from, for example, a rubber material or a resin material. In the present embodiment, the protrusions (protruding sections) 66 are disposed in two places separated in the conveyance direction (the X-axis direction) of the conveyance surface 64 of the auxiliary conveyor 62. It is preferable that the protrusions 66 are present in positions most separated from one another on the conveyance surface 64. The protrusions 66 may be present in one position or may be present in three or more positions on the conveyance surface 64 of the auxiliary conveyor 62. The conveyance assisting apparatus 34 is configured such that the rear end of a package is disposed between the protrusions 66 separated in the X-axis direction.

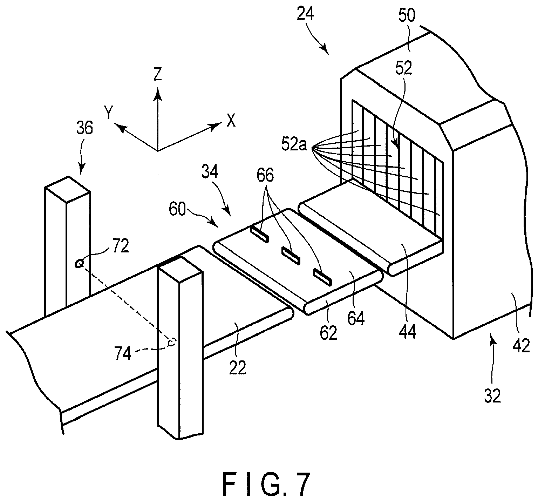

As illustrated in FIG. 7, it is preferable that the plurality of protrusions 66 are not only present in positions separated in the conveyance direction of the conveyance surface 64 but also are arranged in a direction (a Y-axis direction) orthogonal to the moving direction (the conveyance direction) D of the conveyance surface 64. The protrusions 66 formed short are arranged rather than one protrusion 6 are formed long in the Y-axis direction, whereby maintenance of the protrusions 66 is easy. In FIG. 7, an example is illustrated in which the protrusions 66 are arranged in the Y-axis direction. However, not only the protrusions 66 are simply arranged in the Y-axis direction but also the protrusion 66 in the center may be present in a position shifted in the X-axis direction with respect to the protrusion 66 on a side. In FIG. 7, three protrusions 66 are arranged in the Y-axis direction. However, one or two protrusions 66 may be arranged or four or more protrusions 66 may be arranged.

For example, the heights of the plurality of protrusions 66 arranged in the Y-axis direction may be the same or may be partially different. In this case, the protrusions 66 having various heights can be used to push a package into the protection curtain 52.

The protrusions 66 are formed of, for example, a hard rubber material or a resin material. The height of the protrusions 66 with respect to the conveyance surface 64 can be set as appropriate. When the height of the protrusions 66 is small, there is a possibility that a package climbs over the protrusions 66 or rides on the protrusions 66. The height of the protrusions 66 is preferably, for example, about half of the height of a package assumed to be conveyed. According to the height of the protrusions 66, a gap for allowing the protrusions 66 to pass is necessary between the first conveyance portion 22 and the auxiliary conveyor 62 and between the auxiliary conveyor 62 and the conveyor 44 of the radiation inspection apparatus 32. Accordingly, the height of the upstream-side end portion of the conveyance surface 64 of the auxiliary conveyor 62 is preferably set smaller than the height of the downstream-side end portion of the first conveyance portion 22. Similarly, the height of the upstream-side end portion of the conveyor 44 is preferably set smaller than the height of the downstream-side end portion of the conveyance surface 64 of the auxiliary conveyor 62.

The control portion 38 controls the operation of the conveyance surface 64 of the auxiliary conveyor 62. For example, the control portion 38 is capable of controlling the operation of the conveyance surface 64 of the auxiliary conveyor 62 in a state in which the protrusions 66 are disposed at the upstream-side end portion of the conveyance surface 64. That is, the control portion 38 can intentionally dispose the protrusions 66 in the gap between the downstream-side end portion of the first conveyance portion 22 and the upstream-side end portion of the conveyance surface 64 of the auxiliary conveyor 62.

In the present embodiment, the distance between the downstream-side end portion of the auxiliary conveyor 62 and the entrance 50a of the shielding box 50 or the protection curtain 52 is preferably smaller than the length along the X-axis direction of a smallest package assumed to be conveyed. In the present embodiment, the distance between the protection curtain 52 and the upstream-side end portion of the conveyance surface 45 of the conveyor 44 of the radiation inspection apparatus 32 projecting to the upstream side from the protection curtain 52 is set as small as possible.

The distance between the exit 50b of the shielding box 50 or the protection curtain 54 and the downstream-side end portion of the conveyance surface 45 of the conveyor 44 of the radiation inspection apparatus 32 projecting to the downstream side from the protection curtain 54 is set to, for example, about the same as the distance between the entrance 50a of the shielding box 50 or the protection curtain 52 and the upstream-side end portion of the conveyance surface 45 of the conveyor 44 of the radiation inspection apparatus 32 projecting to the upstream side from the entrance 50a of the shielding box 50 or the protection curtain 52.

The package detection apparatus 36 includes a light projecting portion 72 and a light receiving portion 74 to sandwich the first conveyance portion 22. The package detection apparatus 36 is controlled by the control portion 38 and detects front ends and rear ends of packages conveyed from the first conveyance portion 22 toward the radiation inspection apparatus 32. Since the package detection apparatus 36 includes a plurality of light projecting portions 72 and a plurality of light receiving portions 74, it is possible to detect front ends and rear ends of packages having various heights and shapes.

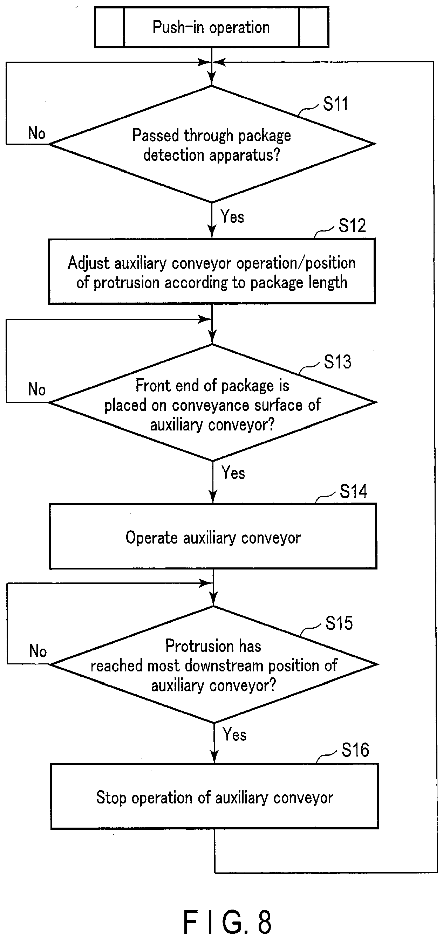

Action of the radiation inspection system 24 of the package processing system 10 is explained with reference to a flowchart of FIG. 8. Here, in particular, a push-in operation of pushing a package conveyed from the first conveyance portion 22 toward the radiation inspection apparatus 32 into the protection curtain 52 of the radiation inspection apparatus 32 is explained.

In order to form a gap for allowing the protrusions 66 to pass between the downstream-side end portion of the first conveyance portion 22 and the upstream-side end portion of the conveyance surface 64 of the auxiliary conveyor 62 and to deliver the package from the first conveyance portion 22 to the conveyance surface 64 of the auxiliary conveyor 62, the height of the upstream-side end portion of the conveyance surface 64 of the auxiliary conveyor 62 is set smaller than the height of the downstream-side end portion of the first conveyance portion 22. Similarly, the height of the upstream-side end portion of the conveyor 44 is set smaller than the height of the downstream-side end portion of the conveyance surface 64 of the auxiliary conveyor 62. A conveyance direction and conveyance height of the conveyance surface 45 of the conveyor 44 of the radiation inspection apparatus 32 are substantially matched with a conveyance direction and conveyance height at the upstream-side end portion of the second conveyance portion 26. The radiation inspection system 24 is used in this state. Here, according to the control of the control portion 38, the radiation inspection system 24 sets conveying speed of the second conveyance portion 26 higher than the speed of the conveyance surface 45 of the conveyor 44 of the radiation inspection apparatus 32.

In the package registration area 12, the package processing system 10 measures the sizes, shapes, and weights of packages conveyed from the package registration area 12 toward the radiation inspection system 24, obtains information concerning the packages, and selects a destination from a plurality of radiation inspection systems 24 in the radiation inspection area 14. The package processing system 10 electronically assigns numbers to the packages directed to the radiation inspection system 24 set as the destination of the packages. The packages are conveyed toward the radiation inspection system 24 in the order of the numbers determined by the package processing system 10. The packages P11, P12, P13, P14, and P15 illustrated in FIGS. 2 to 6 are conveyed to the downstream side by the first conveyance portion 22, for example, at the same pitch.

The package detection apparatus 36 of the radiation inspection system 24 detects front ends and rear ends of packages P11, P12, P13, P14, and P15 conveyed by the first conveyance portion 22 in the vicinity of the downstream-side end portion of the first conveyance portion 22. The control portion 38 determines whether the packages P11, P12, P13, P14, and P15 have passed through the package detection apparatus 36 (S11). From detection times of the front ends and the rear ends of the packages P11, P12, P13, P14, and P15 by the package detection apparatus 36 and the conveying speed of the first conveyance portion 22, the control portion 38 recognizes lengths of the packages P11, P12, P13, P14, and P15 along the X-axis direction. The control portion 38 may obtain information concerning the shapes and sizes obtained in the package registration area 12 and recognize the lengths along the X-axis direction. In this case, the package detection apparatus 36 only has to be able to detect times when the rear ends of the packages passed.

The control portion 38 adjusts operation timing of the conveyance surface 64 of the auxiliary conveyor 62 with respect to delivery timing of the packages from the first conveyance portion 22 to the conveyance surface 64 of the auxiliary conveyor 62 by the operation of the first conveyance portion 22. Specifically, the control portion 38 adjusts the position of the conveyance surface 64 of the auxiliary conveyor 62 such that the protrusions 66 are present in the gap between the downstream-side end portion of the first conveyance portion 22 and the upstream-side end portion of the conveyance surface 64 of the auxiliary conveyor 62 when the rear end of a certain package moves from the first conveyance portion 22 onto the conveyance surface 64 of the auxiliary conveyor 62 (S12).

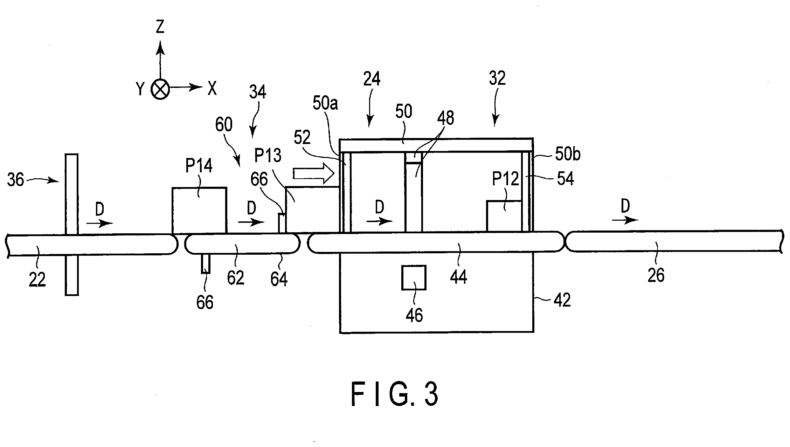

For example, as illustrated in FIGS. 2 and 3, the radiation inspection system 24 delivers a package from the first conveyance portion 22 to the conveyance surface 64 of the auxiliary conveyor 62 of the conveyance assisting apparatus 34 at the downstream-side end portion of the first conveyance portion 22. The control portion 38 determines, according to the conveying speed of the first conveyance portion 22 and a passing time when which the package passed through the package detection apparatus 36, whether the front end of the package is placed on the conveyance surface 64 of the auxiliary conveyor 62 (S13). For example, the auxiliary conveyor 62 is operated immediately after the front end of the package is placed on the conveyance surface 64 of the auxiliary conveyor 62 (S14). As illustrated in FIG. 2, the protrusions 66 are located behind the package P13.

As illustrated in FIG. 2, for example, the package P13 comes into contact with the protection curtain 52 with the conveying force of the conveyance surface 64 of the auxiliary conveyor 62 and the conveyance surface 45 of the conveyor 44 of the radiation inspection apparatus 32. It is assumed that the weight of the package P13 in contact with the protection curtain 52 is small, the protection curtain 52 cannot be pushed away, the package P13 slips on the conveyance surface 64 of the auxiliary conveyor 62 and the conveyor 44 of the radiation inspection apparatus 32, and the package P13 remains on the outer side of the shielding box 50.

Since the package P13 is slips on the conveyance surface 64 of the auxiliary conveyor 62, as illustrated in FIG. 3, the protrusions 66 of the conveyance assisting apparatus 34 moves according to the movement of the conveyance surface 64 and presses the package P13 in contact with the protection curtain 52 from the upstream side toward the downstream side along the conveyance direction D.

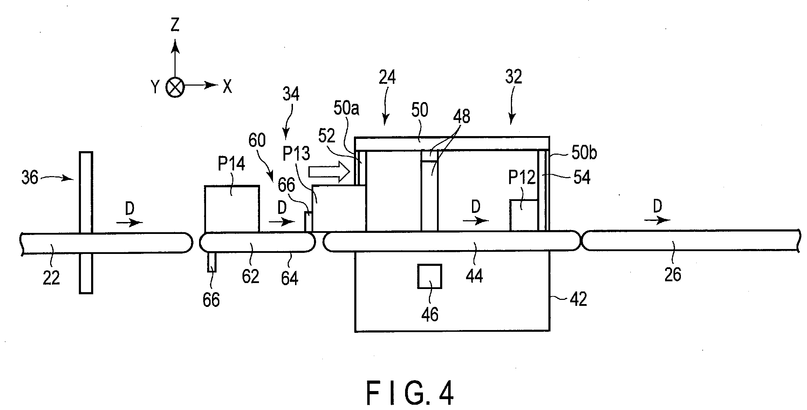

As illustrated in FIG. 4, the front end of the package P13 pushed from the rear by the protrusions 66 of the conveyance assisting apparatus 34 pushes away the protection curtain 52 and enters the shielding box 50 according to conveyance of the conveyance surface 45 of the conveyor 44 of the radiation inspection apparatus 32. The rear end of the package P13 that has pushed away the protection curtain 52 enters the shielding box 50 according to conveyance of the conveyance surface 45 of the conveyor 44 of the radiation inspection apparatus 32.

Thereafter, the control portion 38 determines whether the protrusion 66 present behind the package P13 has reached the downstream-side end portion of the auxiliary conveyor 62 (S15). Once the protrusion 66 present behind the package P13 reaches the downstream-side end portion of the auxiliary conveyor 62, the control portion 38 stops the operation of the auxiliary conveyor 62 (S16).

After the rear end of the package P13 enters the shielding box 50 and the protection curtain 52 is closed, the radiation inspection apparatus 32 emits radiation from the radiation generator 46 and receives the radiation with the line sensor 48. The radiation inspection apparatus 32 obtains, for example, an image of the package P13.

When the length of the package is larger compared with the length of the conveyance surface 64 extending in the X-axis direction of the auxiliary conveyor 62 or the distance between the downstream-side end portion of the first conveyance portion 22 and the upstream-side end portion of the conveyor 44 of the radiation inspection apparatus 32, the package is sometimes placed on one of the protrusions 66 separated in the conveyance direction D. When the conveyance surface 64 of the auxiliary conveyor 62 moves in the conveyance direction D, the protrusion 66 moves to the lower side from the gap between the downstream-side end portion of the conveyance surface 64 of the auxiliary conveyor 62 and the upstream-side end portion of the conveyor 44 of the radiation inspection apparatus 32 and another protrusion 66 is located behind the package. When the package P13 is delivered from the first conveyance portion 22 to the conveyance surface 64 of the auxiliary conveyor 62, the radiation inspection system 24 maintains the posture of the package P13. The package processing system 10 adjusts the moving speeds of the first conveyance portion 22 and the conveyance surface 64 of the auxiliary conveyor 62 to maintain the interval between the packages.

As explained above, the radiation inspection apparatus 32 prevents the package P13 from staying in the entrance 50a of the shielding box 50. The posture of the package P13 is changed, for example, the package P13 rotates in the contact state with the protection curtain 52. The package P13 is prevented from staying in the contact state with the protection curtain 52. Therefore, the package P14 conveyed after the package P13 by the first conveyance portion 22 is prevented from entering the shielding box 50 first. Accordingly, the packages pass through the entrance 50a of the shielding box 50 of the radiation inspection apparatus 32 in the order determined by the package processing system 10 in the package registration area 12.

For example, as illustrated in FIGS. 3 and 4, it is assumed that the package P12 in the shielding box 50 is light in weight and cannot push away the protection curtain 54 on the downstream side, the package P12 slides on the conveyor 44 of the radiation inspection apparatus 32, and the package P12 stays in the exit 50b of the shielding box 50.

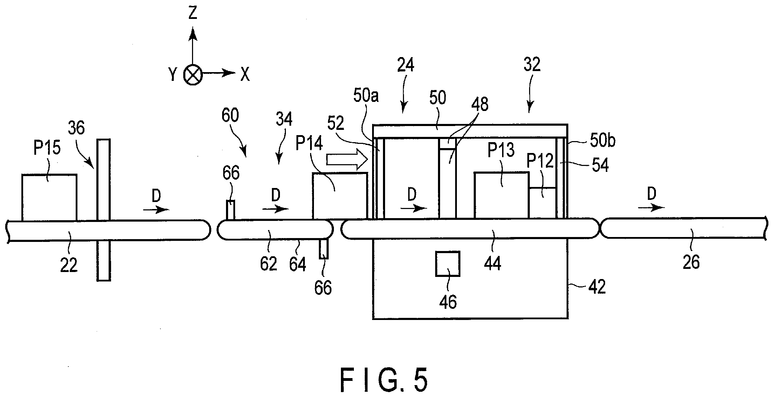

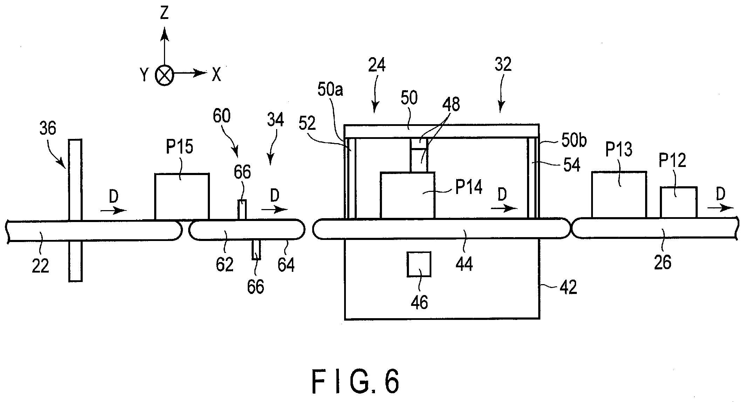

As illustrated in FIG. 5, another package P13 that has undergone the radiation inspection is brought into contact with the package P12 from the rear of the package P12 in contact with the protection curtain 54. A plurality of packages P12 and P13 press the protection curtain 54 together and push away the protection curtain 54 as illustrated in FIG. 6. The plurality of packages P12 and P13 push away the protection curtain 54 together and exit to the outer side of the shielding box 50.

As explained above, the test object (the package) registered in the package registration area 12 passes through the radiation inspection system 24 in the order of conveyance to the radiation inspection system 24.

The conveying speed of the second conveyance portion 26 is higher than the conveying speed of the conveyance surface 45 of the conveyor 44 of the radiation inspection apparatus 32. When the preceding package P12 is delivered from the conveyor 44 of the radiation inspection apparatus 32 to the second conveyance portion 26, the plurality of packages P12 and P13 are separated.

Such an operation is repeated, and in particular, the packages are prevented from staying in the entrance 50a of the shielding box 50 by the conveyance assisting apparatus 34, and the packages are caused to flow in the conveyor 44 along a predetermined conveyance direction. The control portion 38 operates the conveyance assisting apparatus 34 to push the packages into the protection curtain 52 in order, for example, at a predetermined pitch.

As explained above, the radiation inspection system 24 according to the present embodiment can surely put packages in the shielding box 50 of the radiation inspection apparatus 32 by pressing the packages from the rear with the protrusions 66 fixed to the conveyance surface 64 of the auxiliary conveyor 62 using the conveyance assisting apparatus 34. Accordingly, it is possible to prevent the packages from staying in the entrance 50a of the shielding box 50. Then, the radiation inspection system 24 can execute the radiation inspection for the packages in the order of conveyance by the first conveyance portion 22 as it is.

The protrusions 66 in two places are located in the positions most distant from each other in the X-axis direction on the conveyance surface 64 of the auxiliary conveyor 62. One package is prevented from being simultaneously placed on both of the two protrusions 66. For example, by adjusting the positions of the protrusions 66 of the auxiliary conveyor 62 with respect to the position of the rear end of the package at the downstream-side end portion of the first conveyance portion 22, the protrusions 66 can be surely disposed behind the package when the rear end of the package is placed on the conveyance surface 64 of the auxiliary conveyor 62.

The radiation inspection system 24 according to the present embodiment can use the publicly-known radiation inspection apparatus 32 as it is. Naturally, for example, it is also possible to use a new radiation inspection apparatus 32 having the configuration explained above.

The radiation inspection system 24 can take out the packages P from the shielding box 50 in the order of conveyance by the first conveyance portion 22 (in the order of P11, P12, P13, P14, and P15) as it is. At this time, by setting the conveying speed of the second conveyance portion 26 higher than the conveying speed of the conveyance surface 45 of the conveyor 44 of the radiation inspection apparatus 32, a plurality of packages are prevented from unintentionally integrated.

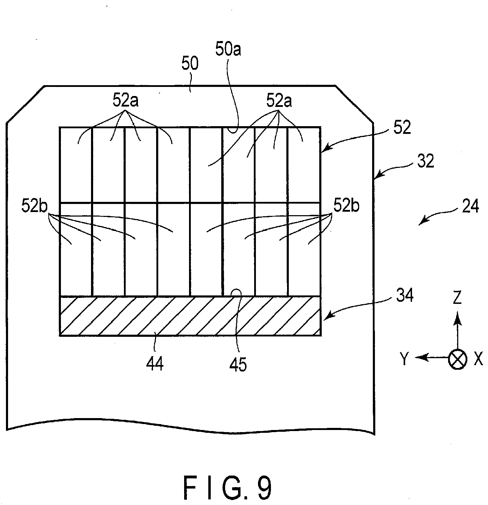

As illustrated in FIG. 9, the protection curtain 52 includes a plurality of strips (flaps) 52a hung from the upper edge of the entrance 50a of the shielding box 50. The strips 52a contain lead, for example, in order to block radiation and has an appropriate weight. A sheet-like member (a frictional resistance reducing material) 52b is attached to a side facing the outer side of the shielding box 50 in the strips 52a. As the sheet-like member 52b, a resin material sheet such as a fluororesin film having adhesiveness on one surface is used. The sheet-like member 52b preferably prevents electrification. The sheet-like member 52b is preferably stuck to a position including the lower ends of the strips 52a. The sheet-like member 52b is preferably stuck to the position including the lower end of the strips 52a but does not need to be stuck to a position including the upper end. The upper end of the sheet-like member 52b depends on the height of a package intended as an inspection target in the radiation inspection apparatus 32.

Frictional resistance generated when the package comes into contact with the sheet-like member 52b is lower than frictional resistance generated when the package comes into direct contact with the strips 52a of the protection curtain 52. Accordingly, the sheet-like member 52b sets frictional resistance with the package lower than when the package directly comes into contact with the strips 52a of the protection curtain 52 and suppresses movement of the conveyance surface 45 of the conveyor 44 and rotation and stay of the package by the protection curtain 52.

Note that a position often in contact with the package such as the lower end of the sheet-like member 52b may be formed in, for example, a hemispherical shape convex toward the upstream side. When the package comes into contact with the lower end of the sheet-like member 52b when the lower end of the sheet-like member 52b is hemispherical, a contact area is smaller compared with when the lower ends of the strips 52a are planes. A pressing force applied to the strips 52a by the package does not affect presence or absence of the sheet-like member 52b. Since the sheet-like member 52b, the lower end of which is formed in the hemispherical shape, receives the pressure of the package with a small area, the lower ends of the strips 52a are easily swung. Therefore, the package easily pushes away the protection curtain 52. The shape of the position often in contact with the package such as the lower end of the sheet-like member 52b only has to have a shape that can reduce a contact area with the package. Accordingly, the sheet-like member 52b can suppress the stay of the package in the entrance 50a of the shielding box 50 of the radiation inspection apparatus 32.

The sheet-like member 52b is preferably also stuck to the inner side, which surely comes into contact with the package, of the protection curtain 54 on the exit 50b side of the shielding box 50. Accordingly, the sheet-like member 52b can prevent the package from staying in the exit 50b of the shielding box 50 of the radiation inspection apparatus 32.

According to the present embodiment, the conveyance assisting apparatus 34 uses the conveyor (the conveyance path) 44 together with the radiation inspection apparatus 32 that irradiates a package (a test object) conveyed in the predetermined conveyance direction D with radiation to inspect the package (the test object). The conveyance assisting apparatus 34 includes the push-in section 60 that pushes a package (a test object) along the conveyance direction D into at least one of the protection curtains (obstacles) 52 and 54 provided in the entrance 50a and the exit 50b of the radiation inspection apparatus 32 to prevent leakage of radiation.

As explained above, according to the present embodiment, it is possible to provide the conveyance assisting apparatus 34 and the radiation inspection system 24 capable of preventing the package from staying in the entrance 50a of the radiation inspection apparatus 32 such as an X-ray inspection apparatus.

### (First modification)

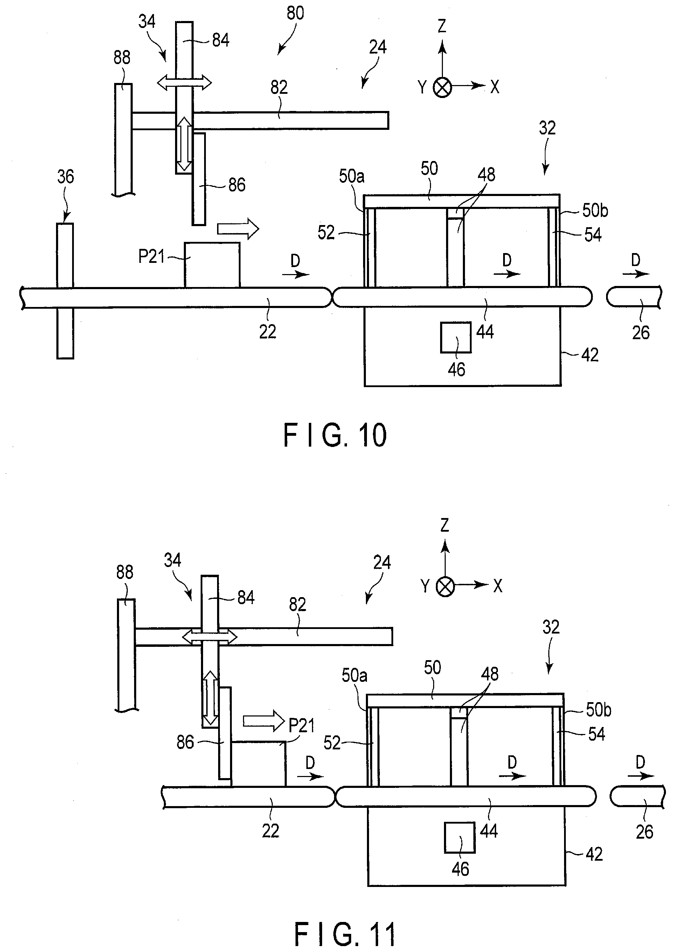

A first modification of the first embodiment is explained with reference to FIGS. 10 to 14.

As illustrated in FIGS. 10 to 13, the conveyance assisting apparatus 34 includes a push-in section (a push-in mechanism) 80 that pushes a package into the protection curtain 52. The push-in section 80 includes a first rail (actuator) 82 extending in the conveyance direction D (the X-axis direction), a second rail (actuator) 84 extending in the up-down direction (the Z-axis direction), and a pressing section 86 provided in the second rail 84.

The first rail 82 is supported by, for example, a frame 88 present above the first conveyance portion 22. The frame 88 is preferably present on the first conveyance portion 22 between the package detection apparatus 36 and the shielding box 50. The first rail 82 may be supported by the shielding box 50 or the ceiling. The first rail 82 is movable in the Z-axis direction (the up-down direction) in an extended state in the X-axis direction.

The second rail 84 is movable in the X-axis direction with respect to the first rail 82 in an extended state in the Z-axis direction (the up-down direction). The second rail 84 is supported by, for example, the frame 88 via the first rail 82. The first rail 82 and the second rail 84 respectively move, for example, linearly with respect to the frame 88.

The pressing section 86 is movable in a direction of approaching and separating from the protection curtain 52 in the entrance 50a of the shielding box 50 (a direction of approaching the protection curtain 52 in the entrance 50a and a direction of separating from the protection curtain 52 in the entrance 50a) and is movable in a direction of approaching and separating from the conveyor 44 or the first conveyance portion 22 of the radiation inspection apparatus 32 (a direction of approaching the conveyor 44 or the first conveyance portion 22 of the radiation inspection apparatus 32 and a direction of separating from the conveyor 44 or the first conveyance portion 22 of the radiation inspection apparatus 32). The direction of approaching and separates from the protection curtain 52 in the entrance 50a and the direction of approaching and separating from the conveyor 44 or the first conveyance portion 22 of the radiation inspection apparatus 32 are directions crossing each other.

The push-in section 80 may include, for example, a third rail movable in the Y-axis direction together with the first rail 82 and the second rail 84.

In the first modification, the conveyance assisting apparatus 34 may or may not include the push-in section 60, which pushes the package, between the downstream-side end portion of the first conveyance portion 22 and the upstream-side end portion of the conveyor 44 of the radiation inspection apparatus 32. Here, a case in which the downstream-side end portion of the first conveyance portion 22 and the upstream-side end portion of the conveyor 44 of the radiation inspection apparatus 32 are adjacent to each other and the push-in section 60 is not present is explained as an example.

The height of the first conveyance portion 22 and the conveyance surface 45 of the conveyor 44 of the radiation inspection apparatus 32 is determined in a predetermined state. When the first rail 82 and the second rail 84 are moved with respect to the frame 88, the lower end of the pressing section 86 is prevented from coming into contact with the first conveyance portion 22 and the conveyor 44 of the radiation inspection apparatus 32.

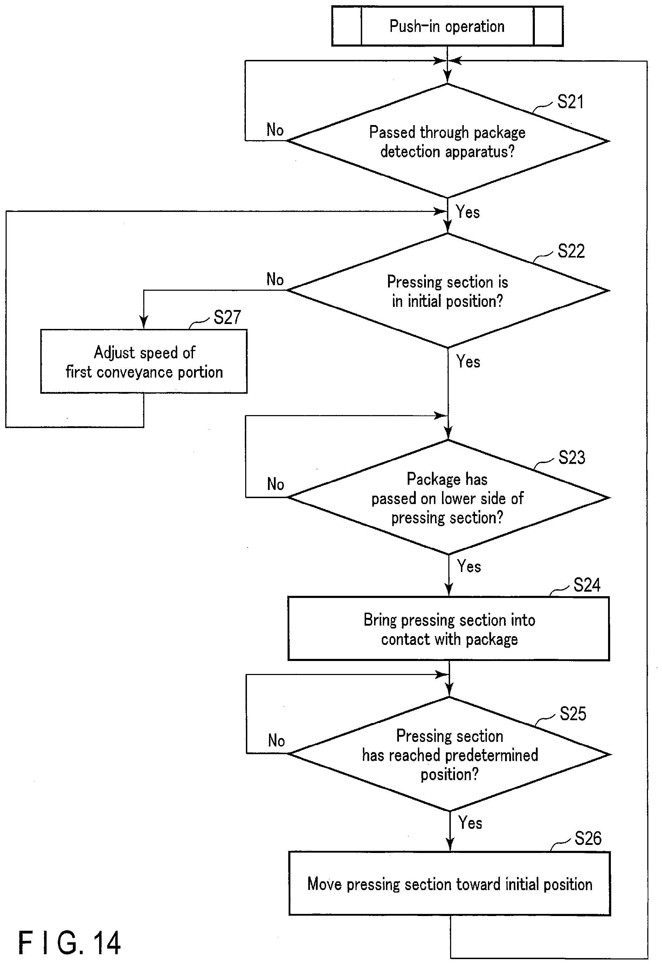

Action of the radiation inspection system 24 of the package processing system 10 is explained with reference to a flowchart of FIG. 14. Here, in particular, a push-in operation of pushing a package into the protection curtain 52 of the radiation inspection apparatus 32 is explained.

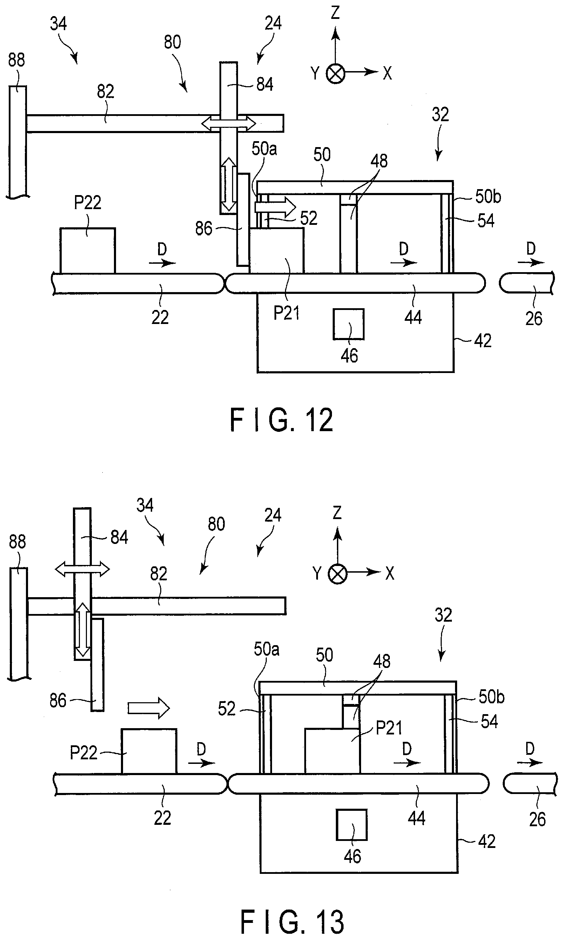

It is assumed that the position of the push-in section 80 illustrated in FIG. 10 is an initial position of the first rail 82, the second rail 84, and the pressing section 86. The initial position is a position where the first rail 82 is present above in the Z-axis direction, the second rail 84 is present on the upstream side, and the package is capable of passing below the pressing section 86. It is assumed that the position of the push-in section 80 illustrated in FIG. 12 is a stop position (a predetermined position) of the first rail 82, the second rail 84, and the pressing section 86.

As explained in the first embodiment, the control portion 38 of the radiation inspection system 24 uses the package detection apparatus 36 to detect the rear end of the package P21 in the vicinity of the downstream-side end portion of the first conveyance portion 22. The control portion 38 calculates the rear end position of the package P21 moving at times based on the conveying speed of the first conveyance portion 22.

The package detection apparatus 36 of the radiation inspection system 24 detects the front end and the rear end of the package conveyed by the first conveyance portion 22 in the vicinity of the downstream-side end portion of the first conveyance portion 22. The control portion 38 determines whether the package has passed through the package detection apparatus 36 (S21).

It is assumed that the push-in section 80 is present in the initial position (S22). As illustrated in FIG. 10, the package P21 placed on the first conveyance portion 22 moves toward the conveyor 44 and the protection curtain 52 of the radiation inspection apparatus 32. The control portion 38 determines whether the rear end of the package P21 has passed below the pressing section 86 (S23).

The control portion 38 calculates X-axis and Z-axis coordinates of the rear end of the package at a certain time. The control portion 38 operates the first rail 82 and the second rail 84 immediately after the rear end of the package P21 passes the lower side of the pressing section 86 to move the pressing section 86 toward the rear end of the package P21. The control portion 38 moves the pressing section 86 toward the X-axis and the Z-axis coordinates in which the rear end of the package is located at a certain time.

As illustrated in FIG. 11, the control portion 38 brings the pressing section 86 into contact with the rear end of the package P21 (S24). Then, the control portion 38 moves the conveying speed of the first conveyance portion 22 and the second rail 84 at the same speed along the conveyance direction D.

As illustrated in FIG. 12, the control portion 38 pushes away the protection curtain 52 and puts the package P21 in the shielding box 50 by assisting the movement of the package P21 toward the protection curtain 52 by the movement of the pressing section 86. The control portion 38 stops the pressing section 86 in a stop position where the pressing section 86 does not come into contact with the shielding box 50 and the protection curtain 52. The pressing section 86 and the package P21 are separated (S25).

As illustrated in FIG. 13, the control portion 38 moves the second rail 84 upward with respect to the first rail 82, moves the pressing section 86 upward, and moves the second rail 84 in a direction opposite to the conveyance direction D and stop the second rail 84 in the initial position on the first conveyance portion 22 (S26). Thereafter, the control portion 38 repeats a series of operations illustrated in FIGS. 10 to 13. The control portion 38 operates the conveyance assisting apparatus 34 to push the packages into the protection curtain 52 in order, for example, at a predetermined pitch.

Accordingly, the packages are surely pushed into the shielding box 50 by the push-in section 80 while pushing away the protection curtain 52.

Note that, after a certain package is pressed by the pressing section 86, when the pressing section 86 cannot fully return to the initial position for pressing of the next package, the control portion 38 adjusts the conveying speed of the first conveyance portion 22 (S27). This includes a stop of the first conveyance portion 22.

As explained above, according to the radiation inspection system 24 according to the present modification, after the pressing section 86 of the push-in section 80 chases the package and bring the pressing section 86 close to or into contact with the rear end of the package, the rear end is pressed to the predetermined position at the same speed as the conveying speed of the first conveyance portion 22. Accordingly, the package can be surely put in the shielding box 50 of the radiation inspection apparatus 32. The package can be prevented from staying in the entrance 50a of the shielding box 50. The radiation inspection system 24 can execute a radiation inspection for the packages in the order of conveyance by the first conveyance portion 22 (in the order of P21 and P22) as it is.

In the present modification as well, the publicly-known radiation inspection apparatus 32 can be used as it is. In the present modification, it is also possible to use a new radiation inspection apparatus 32.

According to the present modification, the conveyance assisting apparatus 34 uses the conveyor (the conveyance path) 44 together with the radiation inspection apparatus 32 that irradiates a package (a test object) conveyed in the predetermined conveyance direction D with radiation to inspect the package (the test object). The conveyance assisting apparatus 34 includes the push-in section 80 that pushes a package (a test object) along the conveyance direction D into the protection curtain 52 that is provided in the entrance 50a of the radiation inspection apparatus 32 and prevents leakage of radiation.

According to the present modification, it is possible to provide the conveyance assisting apparatus 34 and the radiation inspection system 24 capable of preventing a package from staying in the entrance 50a of the radiation inspection apparatus 32.

### (Second Embodiment)

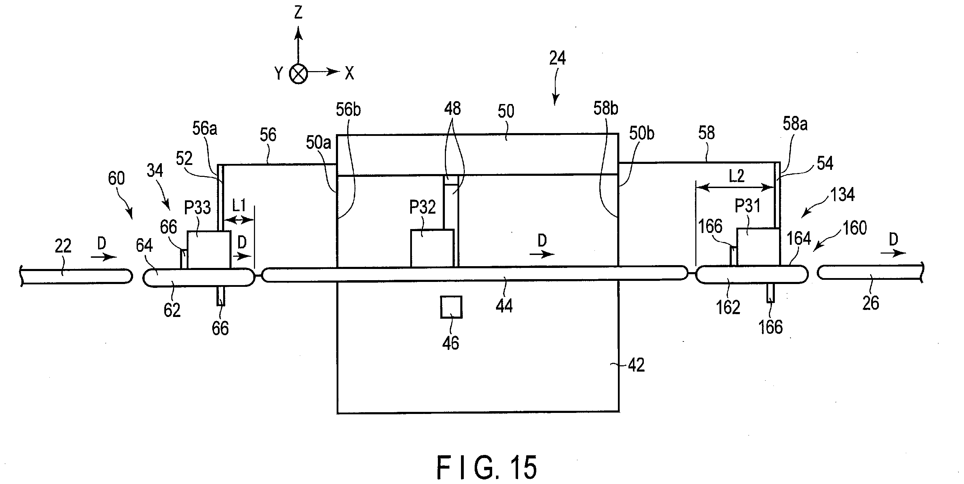

Next, a second embodiment is explained with reference to FIGS. 15 to 18. The present embodiment is a modification of the first embodiment including the first modification. The same members or members having the same functions as the members explained in the first embodiment are denoted by the same reference numerals and signs as much as possible and explanation of the members is omitted.

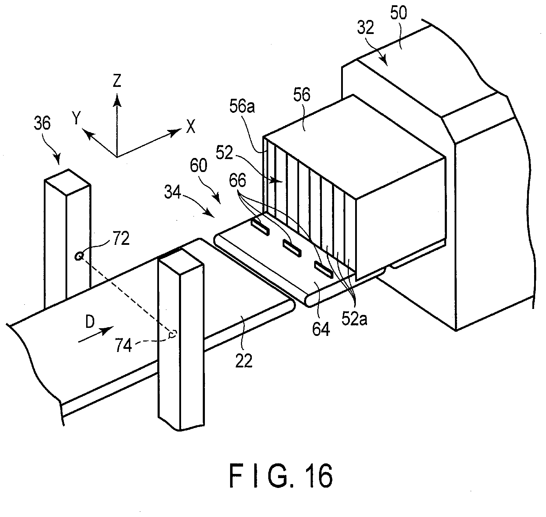

A radiation inspection system 24 in the present embodiment changes the positions of protection curtains 52 and 54 disposed in an entrance 50a and an exit 50b of a shielding box 50 explained in the first embodiment. As illustrated in FIGS. 15 and 16, in the present embodiment, a protection curtain is removed from the entrance 50a and the exit 50b of the shielding box 50 of the radiation inspection apparatus 32. In the present embodiment as well, a publicly-known radiation inspection apparatus 32 can be used. In the present embodiment, it is also possible to use a new radiation inspection apparatus 32.

The radiation inspection system 24 includes a radiation inspection apparatus 32, a first conveyance assisting apparatus (an upstream-side conveyance assisting apparatus) 34, a second conveyance assisting apparatus (a downstream-side conveyance assisting apparatus) 134, a package detection apparatus 36, and a control portion 38.

The first conveyance assisting apparatus (the upstream-side conveyance assisting apparatus) 34 is provided between the downstream-side end portion of a first conveyance portion 22 and the upstream-side end portion of a conveyor 44 of the radiation inspection apparatus 32. The second conveyance assisting apparatus (the downstream conveyance assisting apparatus) 134 is present between the downstream-side end portion of the conveyor 44 of the radiation inspection apparatus 32 and the upstream-side end portion of a second conveyance portion 26.

The first conveyance assisting apparatus 34 includes an upstream-side box (a box portion) 56, a protection curtain (an upstream-side obstacle) 52 for protecting a package from radiation on the upstream side, and a first push-in section 60.

The first push-in section 60 includes a first auxiliary conveyor 62 on the upstream side including a conveyance surface 64 and a protrusion (a push-in section) 66 on the upstream side.

The upstream-side box 56 is formed in a tunnel shape like the shielding box 50. Like the shielding box 50, the upstream-side box 56 is formed of, for example, a plurality of layers of iron plates having an appropriate thickness in order to prevent radiation from leaking to the outside. The upstream-side box 56 extends further to an upstream side in a conveyance direction than the downstream-side end portion of the first auxiliary conveyor 62 on the upstream side from an entrance 50a of the shielding box 50.

An entrance 56a on the upstream side of the upstream-side box 56 is formed as, for example, a substantially rectangular opening in cooperation with the conveyance surface 64 of the first auxiliary conveyor 62 on the upstream side. A protection curtain 52 is hung at the upper edge of the entrance 56a of the upstream-side box 56. The lower end of the protection curtain 52 is slightly in contact with the conveyance surface 64 of the first auxiliary conveyor 62 on the upstream side. An exit 56b of the upstream-side box 56 is fixed to the end face on the upstream side of the shielding box 50. Radiation is prevented from leaking from a connecting position of the upstream-side box 56 and the shielding box 50.

The second conveyance assisting apparatus 134 includes a downstream-side box (a box portion) 58, a protection curtain (a downstream-side obstacle) 54 for protecting a package from radiation on the downstream side, and a second push-in section 160.

The second push-in section 160 includes a second auxiliary conveyor (an auxiliary conveyor portion) 162 on the downstream side having a conveyance surface (a downstream-side conveyance surface) 164 and one or a plurality of protrusions (push-in sections) 166 on the downstream side.

The second auxiliary conveyor 162 on the downstream side is formed the same as the first auxiliary conveyor 62 on the upstream side. The length of the conveyance surface 164 of the second auxiliary conveyor 162 along the X-axis may be the same as or different from the length of the conveyance surface 64 of the first auxiliary conveyor 62 along the X-axis. The protrusions (protrusion sections) 166 on the downstream side are formed the same as the protrusions 66 on the upstream side.

The downstream-side box 58 is formed in a tunnel shape like the shielding box 50. Like the shielding box 50 and the upstream-side box 56, the downstream-side box 58 is formed of, for example, a plurality of layers of iron plates having an appropriate thickness in order to prevent radiation from leaking to the outside. The downstream-side box 58 extends further to the downstream side in the conveyance direction than the upstream-side end portion of the second auxiliary conveyor 162 on the downstream side from the exit 50b of the shielding box 50.

The exit 58a of the downstream-side box 58 is formed as, for example, a substantially rectangular opening in cooperation with the conveyance surface 164 of the second auxiliary conveyor 162 on the downstream side. The protection curtain 54 is hung on the upper edge of the exit 58a of the downstream-side box 58. The lower end of the protection curtain 54 is slightly in contact with the conveyance surface 164 of the second auxiliary conveyor 162 on the downstream side. The entrance 58b of the downstream-side box 58 is fixed to the end face on the downstream side of the shielding box 50. Radiation is prevented from leaking from a connecting position of the downstream-side box 58 and the shielding box 50.

A distance L1 along a conveyance direction D between the downstream-side end portion of the first auxiliary conveyor 62 and the protection curtain 52 on the upstream side is smaller compared with a distance L2 along the conveyance direction D between the upstream-side end portion of the second auxiliary conveyor 162 and the protection curtain 54 on the downstream side.

The control portion 38 is connected to the first conveyance assisting apparatus 34, the second conveyance assisting apparatus 134, and the package detection apparatus 36 by wire communication or wireless communication. The control portion 38 is capable of controlling the first conveyance assisting apparatus 34, the second conveyance assisting apparatus 134, and the package detection apparatus 36 as appropriate.

Action of the radiation inspection system 24 of the package processing system 10 is explained.

Packages are conveyed toward the predetermined radiation inspection system 24 by the first conveyance portion 22 in order of numbers determined by the package processing system 10.

As explained in the first embodiment, the control portion 38 operates the first conveyance assisting apparatus 34 to push the packages into the protection curtain 52 in order, for example, at a predetermined pitch.

A package P33 pushed from the rear by the protrusion 66 of the first conveyance assisting apparatus 34 pushes away the protection curtain 52, is delivered to the conveyor 44 of the radiation inspection apparatus 32 by conveyance of the conveyance surface 64 of the first auxiliary conveyor 62, and enters the shielding box 50. Since a protection curtain is absent in the entrance 50a of the shielding box 50, the package enters the shielding box 50 with a conveying force of the conveyance surface 45 of the conveyor 44 without being interfered. Since a protection curtain is absent in the exit 50b of the shielding box 50, the package is conveyed to the outer side from the shielding box 50 with the conveying force of the conveyance surface 45 of the conveyor 44 without being interfered.

Here, in the first conveyance assisting apparatus 34, when the protrusion 66 that presses a certain package P33 is present at the downstream-side end portion of the conveyance surface 64 of the first auxiliary conveyor 62, the rear end of the package P33 is present in the vicinity of the upstream-side end portion of the conveyor 44 of the radiation inspection apparatus 32 or further on the downstream side in a conveyance direction than the vicinity of the upstream-side end portion. The control portion 38 calculates, according to the length and the conveying speed of the conveyor 44 of the radiation inspection apparatus 32, a time when the rear end of the certain package P33 passes the downstream-side end portion of the conveyor 44 of the radiation inspection apparatus 32. Therefore, in the control of the second conveyance assisting apparatus 134, the control portion 38 controls the protrusion 166 fixed to the conveyance surface 164 to be present at the upstream-side end portion of the conveyance surface 164 when the rear end of the certain package P33 passes the downstream-side end portion of the conveyor 44 of the radiation inspection apparatus 32. Therefore, the package P33 is pressed from the rear by the protrusion 166. Accordingly, the package P33 is pushed into the protection curtain 54 by a conveying force of the conveyance surface 164 of the second auxiliary conveyor 162, pushes away the protection curtain 54, and is taken out to the outside. The package P33 taken out to the outside is conveyed to the downstream side of the second conveyance portion 26 by the second conveyance portion 26.

As explained above, the package is pushed into the protection curtain 52 by the protrusions (upstream push-in protrusions) 66 that follow the movement of the conveyance surface 64 of the first auxiliary conveyor 62. Therefore, the first conveyance assisting apparatus 34 pushes away the protection curtain 52 and inserts the package toward the conveyor 44 of the radiation inspection apparatus 32. The radiation inspection system 24 prevents the packages from staying in the protection curtain 52. Accordingly, the posture of the package conveyed by the first conveyance portion 22 is changed, for example, the package rotates in a contact state with the protection curtain 52. The package is prevented from staying in the contact state with the protection curtain 52. Therefore, a package conveyed after the package by the first conveyance portion 22 is prevented from entering the shielding box 50 first.

Here, when the distance between the downstream-side end portion of the first auxiliary conveyor 62 and the protection curtain 52 on the upstream side is reduced, there is a possibility that the front end of the package comes into contact with the protection curtain 52 before the rear end of the package is placed on the conveyance surface 64 of the first auxiliary conveyor 62. At this time, there is a possibility that the rear end of the package is present further on the upstream side than the protrusion 66, the protrusion 66 only travels on the lower side of the package, and a pressing force along the conveyance direction D cannot be applied to the package.

In contrast, in the present embodiment, by reducing a distance L1 between the downstream-side end portion of the first auxiliary conveyor 62 and the protection curtain 52 on the upstream side, the distance between the downstream-side end portion of the first auxiliary conveyor 62 and the protection curtain 52 on the upstream side is increased. Accordingly, the rear end of the package can be placed on the conveyance surface 64 of the first auxiliary conveyor 62 before the front end of the package comes into contact with the protection curtain 52. The package can be pressed against the protection curtain 52 by the protrusion 66.

Similarly, the package is pushed into the protection curtain 54 by the protrusion (the downstream-side push-in protrusion) 166 that follows the movement of the conveyance surface 164 of the second auxiliary conveyor 162. Therefore, the second conveyance assisting apparatus 134 pushes away the protection curtain 54 and takes out the package from the conveyor 44 of the radiation inspection apparatus 32 toward the outside of the radiation inspection apparatus 32. The radiation inspection system 24 prevents the packages from staying in the protection curtain 54. Accordingly, the posture of the package conveyed by the first conveyance portion 22 and the conveyor 44 of the radiation inspection apparatus 32 is changed, for example, the package rotates in a contact state with the protection curtain 54, and the package is prevented from staying in the contact state with the protection curtain 52. Therefore, a package conveyed to the conveyor 44 of the radiation inspection apparatus 32 after the package by the first conveyance portion 22 is prevented from being taken out to the second conveyance portion 26 first.

Therefore, in a state in which the postures of the packages conveyed by the first conveyance portion 22 are less easily changed, the packages are conveyed to the second conveyance portion 26 through the radiation inspection system 24 in the order of conveyance from the first conveyance portion 22 (in the order of P31, P32, and P33).

Here, when the distance between the downstream-side end portion of the second auxiliary conveyor 162 and the protection curtain 54 on the downstream side is reduced, there is a possibility that the front end of the package comes into contact with the protection curtain 54 before the rear end of the package is placed on the conveyance surface 164 of the second auxiliary conveyor 162. At this time, there is a possibility that the rear end of the package is present further on the upstream side than the protrusion 166, the protrusion 166 only travels on the lower side of the package, and a pressing force along the conveyance direction D cannot be applied to the package.

In contrast, in the present embodiment, the distance L2 between the downstream-side end portion of the second auxiliary conveyor 162 and the protection curtain 52 on the upstream side is increased. Accordingly, the rear end of the package can be placed on the conveyance surface 164 of the second auxiliary conveyor 162 before the front end of the package comes into contact with the protection curtain 54. The package can be pressed against the protection curtain 54 by the protrusion 166.

In the present embodiment, an example is explained in which the radiation inspection system 24 includes both of the first conveyance assisting apparatus 34 and the second conveyance assisting apparatus 134. If the first conveyance assisting apparatus 34 is present, the radiation inspection system 24 can prevent a package from staying in the entrance 50a of the radiation inspection apparatus 32. Similarly, if the second conveyance assisting apparatus 134 is present, the radiation inspection system 24 can prevent a package from staying in the exit 50b of the radiation inspection apparatus 32. The radiation inspection system 24 may include at least one of the first conveyance assisting apparatus 34 and the second conveyance assisting apparatus 134.

The conveyance assisting apparatuses 34 and 134 use the conveyor (the conveyance path) 44 together with the radiation inspection apparatus 32 that irradiates a package (a test object) conveyed in the predetermined conveyance direction D with radiation to inspect the package. The conveyance assisting apparatuses 34 and 134 include an auxiliary conveyor portion, a box portion, a curtain portion (an obstacle), and a push-in protrusion section (a push-in section). The auxiliary conveyor portion includes at least one of the first auxiliary conveyor 62 that is present on the upstream side of the conveyance path 44 of the radiation inspection apparatus 32 and inserts a package toward the radiation inspection apparatus 32 and the second auxiliary conveyor 162 that is present on the downstream side of the conveyance path 44 of the radiation inspection apparatus 32 and takes out a package from the radiation inspection apparatus 32. When the first auxiliary conveyor 62 on the upstream side is present, the box portion includes the upstream-side box 56 having a tunnel shape extending further to the upstream side in the conveyance direction D than the downstream-side end portion of the first auxiliary conveyor 62 on the upstream side from the entrance 50a of the radiation inspection apparatus 32. When the second auxiliary conveyor 162 on the downstream side is present, the box portion includes the downstream-side box 58 having a tunnel shape extending further to the downstream side in the conveyance direction D than the upstream-side end portion of the second auxiliary conveyor 162 on the downstream side from the exit 50b of the radiation inspection apparatus 32. When the upstream-side box 56 is present, the curtain portion (the obstacle) includes the upstream-side protection curtain (an upstream-side obstacle) 52 hung from the upstream-side box 56 toward the first auxiliary conveyor 62 on the upstream side above the first auxiliary conveyor 62 on the upstream side. When the downstream-side box 58 is present, the curtain portion includes the protection curtain on the downstream side (a downstream-side obstacle) 54 hung from the downstream-side box 58 toward the second auxiliary conveyor 162 on the downstream side above the second auxiliary conveyor 162 on the downstream side. When the protection curtain 52 is present in the upstream-side box 56, the push-in protrusion section (the push-in section) includes the upstream-side push-in protrusion (an upstream-side push-in section) 66 that pushes a package into the protection curtain 52 on the downstream side from the upstream side with respect to the package. When the protection curtain 54 on the downstream side is present in the downstream-side box 58, the push-in section includes the downstream-side push-in protrusion (a downstream-side push-in section) 166 that pushes a package into the protection curtain 54 on the downstream side from the upstream side with respect to the package.

According to the present embodiment, it is possible to provide the conveyance assisting apparatus 34 and the radiation inspection system 24 capable of preventing a package from staying in the entrance 50a of the radiation inspection apparatus 32. According to the present embodiment, it is possible to provide the conveyance assisting apparatus 134 and the radiation inspection system 24 capable of preventing a package from staying in the exit 50b of the radiation inspection apparatus 32.

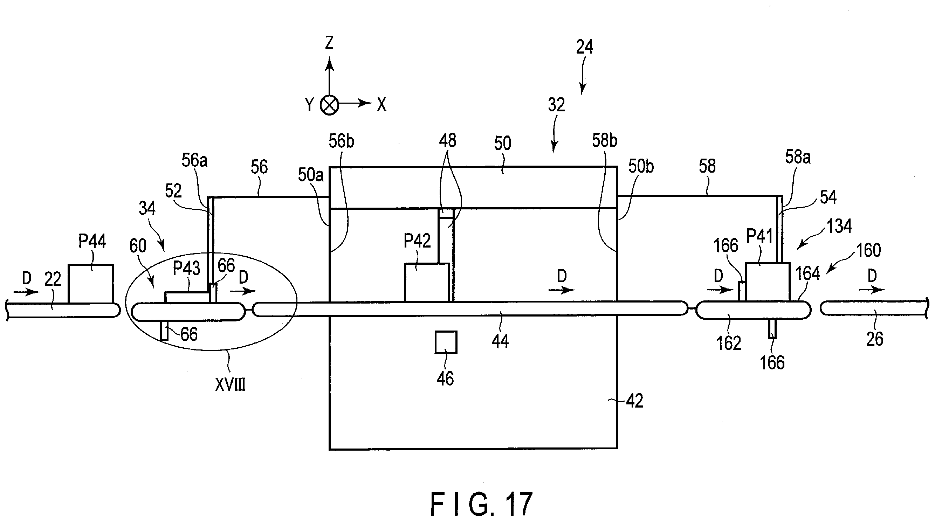

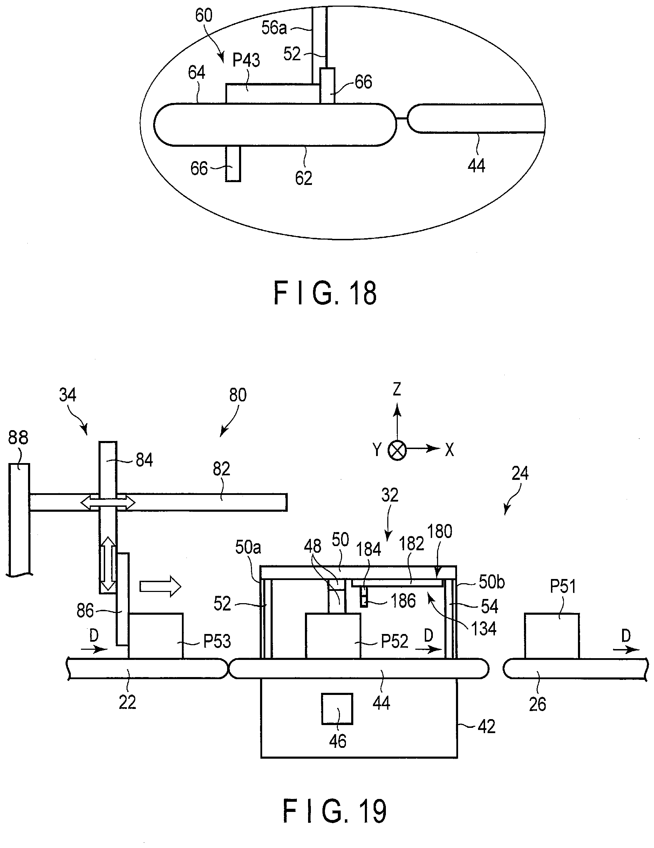

The shapes, sizes, weights, and the like of the packages are recognized in a package registration area 12 upstream of the radiation inspection system 24. As illustrated in FIGS. 17 and 18, a package having height smaller than the height of the protrusion 66 is sometimes conveyed to the radiation inspection system 24 through the first conveyance portion 22. The control portion 38 may dispose the protrusion 66 on the downstream side (the front side) in the conveyance direction D of a package P43. At this time, since the protrusion 66 pushes away the protection curtain 52, the package P43 is put in the upstream-side box 56 following the protrusion 66. Accordingly, the protrusion 66 is not used to push the package P43 from the rear to push away the protection curtain 52. The protrusion 66 can be used to push away the protection curtain 52 and put the package P43 in the upstream-side box 56. Note that, as explained above, the package P43 may be pressed by the protrusion 66.

According to an example illustrated in FIGS. 17 and 18, in a state in which the posture of a package conveyed by the first conveyance portion 22 is less easily changed, the packages are conveyed to the second conveyance portion 26 through the radiation inspection system 24 in the order of conveyance from the first conveyance portion 22 (in the order of P41, P42, P43, and P44).

### (Third Embodiment)

A third embodiment is explained with reference to FIGS. 19 to 21. The present embodiment is a modification of the first embodiment including the first modification and the second embodiment. The same members or members having the same functions as the members explained in the first embodiment and the second embodiment are denoted by the same reference numerals and signs as much as possible and explanation of the members is omitted.

A radiation inspection system 24 in the present embodiment includes a radiation inspection apparatus 32, a first conveyance assisting apparatus 34, a second conveyance assisting apparatus 134, a package detection apparatus 36, and a control portion 38. An example is explained in which the radiation inspection system 24 in the present embodiment is used by attaching a push-in section (a push-in mechanism) 180 explained below to the radiation inspection apparatus 32 as the second conveyance assisting apparatus 134.

As explained in the first modification of the first embodiment, the first conveyance assisting apparatus 34 includes a first push-in section 80 that pushes a package into the protection curtain 52. Explanation is omitted about this.

The second conveyance assisting apparatus 134 is attached in a shielding box 50 of the radiation inspection apparatus 32. The second conveyance assisting apparatus 134 includes the second push-in section 180 that pushes a package in the shielding box 50 of the radiation inspection apparatus 32 into a protection curtain 54 hung in an exit 50b of the shielding box 50.

The push-in section 180 includes a rail 182 extending in a conveyance direction D (an X-axis direction) and an actuator (a cylinder) 184 including a piston rod 186 that moves in the up-down direction (a Z-axis direction) and has a lower end serving as a pressing section. The rail 182 is disposed on, for example, a ceiling or an inner wall of the shielding box 50. The upper end of the actuator 184 is supported by the rail 182. The actuator 184 is movable within a predetermined range in the X-axis direction (a direction along the conveyance direction D) by the rail 182.

The control portion 38 is connected to the first conveyance assisting apparatus 34, the second conveyance assisting apparatus 134, and the package detection apparatus 36 by wire communication or wireless communication. The control portion 38 is capable of controlling the first conveyance assisting apparatus 34, the second conveyance assisting apparatus 134, and the package detection apparatus 36 as appropriate.

Action of the radiation inspection system 24 of the package processing system 10 is explained.

Packages are conveyed toward the predetermined radiation inspection system 24 by the first conveyance portion 22 in order of numbers determined by the package processing system 10.

As explained in the first modification of the first embodiment, the first push-in section 80 of the first conveyance assisting apparatus 34 is operated to push the packages into the protection curtain 52 in order.

A package pushed from the rear by a pressing section 86 of the first conveyance assisting apparatus 34 pushes away the protection curtain 52 and enters the shielding box 50 with a conveying force of a conveyor 44 of the radiation inspection apparatus 32.

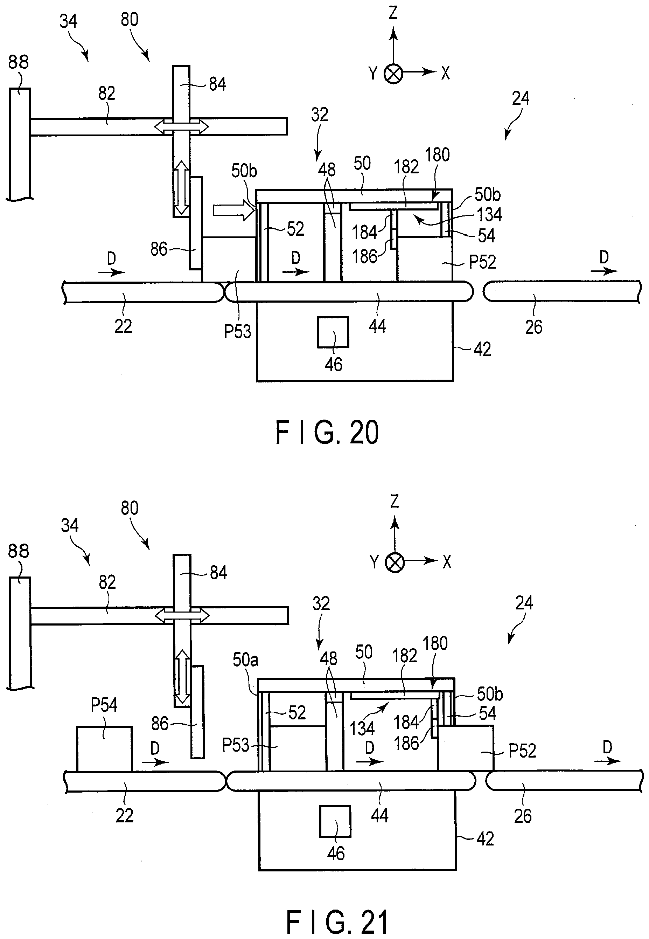

Here, in the first conveyance assisting apparatus 34, when the pressing section 86 that presses a certain package is present in a predetermined position closest to an entrance 50a of the shielding box 50 (see FIG. 12), the rear end of the package is present in the vicinity of the upstream-side end portion of the conveyor 44 of the radiation inspection apparatus 32 or further on the downstream side in the conveyance direction than the vicinity of the upstream-side end portion. The control portion 38 calculates, according to the length and conveying speed of the conveyor 44 of the radiation inspection apparatus 32, a time when the rear end of a certain package passes an appropriate position of the conveyor 44 of the radiation inspection apparatus 32. Therefore, in the control of the second conveyance assisting apparatus 134, when the rear end of a certain package P52 passes between the conveyor 44 of the radiation inspection apparatus 32 and the lower end of the piston rod 186, the control portion 38 controls the piston rod 186 of the actuator 184 to move with respect to the rail 182 such that the piston rod 186 presses (abuts) the package P52 from the rear. The piston rod 186 moves at the same speed as the conveying speed of the conveyor 44 of the radiation inspection apparatus 32 to a predetermined position (see FIG. 21) closest to the exit 50b of the shielding box 50. Accordingly, the package P52 is pushed into the protection curtain 54 by a conveying force of the conveyor 44 of the radiation inspection apparatus 32 and a pressing force of the piston rod 186 and pushes away the protection curtain 54 to be taken out to the outside. The package P52 taken out to the outside is delivered from the conveyor 44 of the radiation inspection apparatus 32 to the second conveyance portion 26, and is conveyed to the downstream side of the second conveyance portion 26.

As explained above, the package is pushed into the protection curtain 52 by the pressing section 86 of the first push-in section 80. Therefore, the first conveyance assisting apparatus 34 pushes away the protection curtain 52 and inserts the package toward the conveyor 44 of the radiation inspection apparatus 32. The radiation inspection system 24 prevents the packages from staying in the protection curtain 52. Accordingly, the posture of the package conveyed by the first conveyance portion 22 is changed, for example, the package rotates in a contact state with the protection curtain 52. The package is prevented from staying in the contact state with the protection curtain 52. Therefore, a package conveyed after the package by the first conveyance portion 22 is prevented from entering the shielding box 50 first.

Similarly, the package is pushed into the protection curtain 54 by the piston rod 186 of the second push-in section 180. Therefore, the second conveyance assisting apparatus 134 pushes away the protection curtain 54 and takes out the package from the conveyor 44 of the radiation inspection apparatus 32 toward the outside of the radiation inspection apparatus 32. The radiation inspection system 24 prevents the packages from staying in the protection curtain 54. Accordingly, the posture of the package conveyed by the first conveyance portion 22 and the conveyor 44 of the radiation inspection apparatus 32 is changed, for example, the package rotates in a contact state with the protection curtain 54. The package is prevented from staying in the contact state with the protection curtain 54. Therefore, a package conveyed to the conveyor 44 of the radiation inspection apparatus 32 after the package by the first conveyance portion 22 is prevented from being taken out to the second conveyance portion 26 first.

Therefore, in a state in which the posture of the package conveyed by the first conveyance portion 22 is less easily changed, the packages are conveyed to the second conveyance portion 26 through the radiation inspection system 24 in the order of conveyance from the first conveyance portion 22 (in the order of P51, P52, P53, and P54).

According to the present embodiment, the push-in sections 80 and 180 are provided above the conveyance path 44 in the radiation inspection apparatus 32 or above the upstream side of the radiation inspection apparatus 32 of the conveyance path 44 and include the pressing sections 86 and 186 that are movable in a direction (the X-axis direction) of approaching and separating from the obstacles 52 and 54 and a direction (the Z-axis direction) crossing a direction of approaching the conveyance path 44 and a direction of separating from the conveyance path 44.

According to the present embodiment, it is possible to provide the conveyance assisting apparatus 34 and the radiation inspection system 24 capable of preventing a package from staying in the entrance 50a of the radiation inspection apparatus 32. According to the present embodiment, it is possible to provide the conveyance assisting apparatus 134 and the radiation inspection system 24 capable of preventing a package from staying in the exit 50b of the radiation inspection apparatus 32.

As explained above, when the first auxiliary conveyor 62 on the upstream side and the upstream-side box 56 illustrated in FIGS. 15 to 17 are absent, the first conveyance assisting apparatus 34 preferably includes, for example, the push-in section 80 illustrated in FIGS. 19 to 21 instead of the push-in section 60 illustrated in FIGS. 15 to 17.

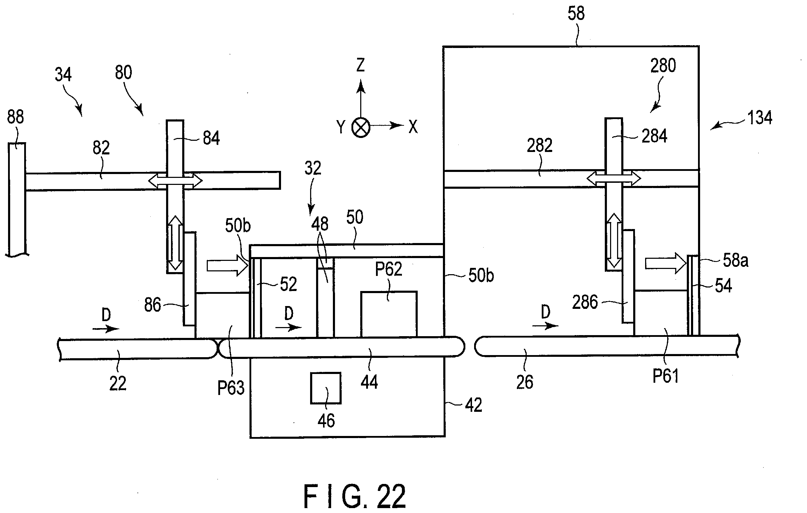

When the second auxiliary conveyor 162 on the downstream side illustrated in FIGS. 15 and 17 is absent, the second conveyance assisting apparatus 134 preferably includes, for example, the push-in section 180 illustrated in FIGS. 19 to 21 or a push-in section 280 illustrated in FIG. 22 explained below instead of the push-in section 160 illustrated in FIGS. 15 and 17.

Note that, if the first conveyance assisting apparatus 34 is present, the radiation inspection system 24 is capable of preventing a package from staying in the entrance 50a of the radiation inspection apparatus 32. Similarly, if the second conveyance assisting apparatus 134 is present, the radiation inspection system 24 can prevent a package from staying in the exit 50b of the radiation inspection apparatus 32. As explained in the second embodiment, at least one of the first conveyance assisting apparatus 34 including the first push-in section 80 and the second conveyance assisting apparatus 134 including the second push-in section 180 only has to be present.

### (First modification)

A first modification of the third embodiment is explained with reference to FIG. 22.

The second conveyance assisting apparatus 134 illustrated in FIG. 22 includes the downstream-side box (the box portion) 58, the protection curtain (the downstream-side obstacle) 54 for protecting a package from radiation on the downstream side, and the second push-in section 280.

The second push-in section 280 has, for example, the same configuration as the first push-in section 80. Here, a first rail 282 extending in the conveyance direction D (the X-axis direction) is supported by an inner wall or a ceiling of the downstream-side box 58. The first rail 282 is movable in the Z-axis direction (the up-down direction). The second rail 284 extends in the Z-axis direction (the up-down direction) and is movable in the X-axis direction with respect to the first rail 282. The first rail 282 and the second rail 284 respectively move, for example, linearly with respect to the downstream-side box 58. The pressing section 286 is supported by the second rail 284.

The pressing section 286 is movable in a direction of approaching and separating from the protection curtain 54 in the exit 58a of the downstream-side box 58 (a direction of approaching the protection curtain 54 in the exit 58a and a direction of separating from the protection curtain 54 in the exit 58a) and is movable in a direction of approaching and separating from the second conveyance portion 26 (a direction of approaching and a direction of separating from the second conveyance portion 26). The direction of coming into contact with and separating from the protection curtain 54 in the exit 58a and the direction of approaching and separating from the second conveyance portion 26 are directions crossing each other.

Note that the protection curtain 54 is absent in the exit 50b of the shielding box 50 of the radiation inspection apparatus 32.

A package is pushed into the protection curtain 54 by the pressing section 286 of the second push-in section 280. Therefore, the second conveyance assisting apparatus 134 pushes away the protection curtain 54 and takes out the package conveyed from the conveyor 44 of the radiation inspection apparatus 32 to the second conveyance portion 26. The radiation inspection system 24 prevents the packages from staying in the protection curtain 54. Accordingly, the posture of the package conveyed by the first conveyance portion 22 and the conveyor 44 of the radiation inspection apparatus 32 is changed, for example, the package rotates in a contact state with the protection curtain 54. The package is prevented from staying in the contact state with the protection curtain 54. Therefore, a package conveyed from the conveyor 44 of the radiation inspection apparatus 32 to the second conveyance portion 26 later is prevented from being conveyed to the downstream side of the second conveyance portion 26 through the protection curtain 54 first. Then, the radiation inspection system 24 can execute a radiation inspection for the packages in the order of conveyance by the first conveyance portion 22 (in the order of P61, P62, and P63) as it is.

Usually, a protective wall for protecting a package from leaking radiation is sometimes provided in the vicinity of the radiation inspection apparatus 32. When the push-in section 280 of the second conveyance assisting apparatus 134 is disposed on the downstream side of the radiation inspection apparatus 32, the downstream-side box 58 can be used instead of the protective wall.

### (Fourth Embodiment)

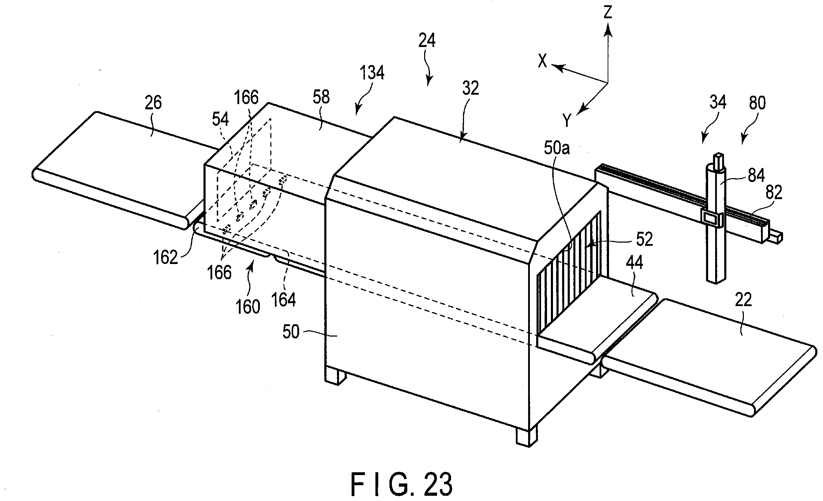

A fourth embodiment is explained with reference to FIG. 23. The present embodiment is a modification of the first embodiment including the first modification, the second embodiment, and the third embodiment including the first modification. The same members or members having the same functions as the members explained in the first embodiment, the second embodiment, and the third embodiment are denoted by the same reference numerals and signs as much as possible and explanation of the members is omitted.

The radiation inspection system 24 includes a radiation inspection apparatus 32, a first conveyance assisting apparatus 34, a second conveyance assisting apparatus 134, a package detection apparatus 36, and a control portion 38.

In an example illustrated in FIG. 23, for example, a publicly-known radiation inspection apparatus 32 is maintained as it is on an entrance 50a side of a shielding box 50 of the radiation inspection apparatus 32. A push-in section 80 of the first conveyance assisting apparatus 34 explained in the first modification of the first embodiment is disposed in the vicinity of the entrance 50a of the shielding box 50 of the radiation inspection apparatus 32.

On an exit 50b side of the shielding box 50 of the radiation inspection apparatus 32, the position of the protection curtain 54 is changed. The second conveyance assisting apparatus 134 is disposed on the exit 50b side of the shielding box 50. As explained in the second embodiment, the second conveyance assisting apparatus 134 includes a downstream-side box 58, a protection curtain 54 on the downstream side, and a second push-in section 160.

With such a combination, in the radiation inspection system 24 according to the present embodiment, by the first conveyance assisting apparatus 34, a package conveyed in a first conveyance portion 22 pushes away a protection curtain 52 and is put into a conveyance surface 45 of a conveyor 44 in the shielding box 50 of the radiation inspection apparatus 32. The package put in the shielding box 50 is delivered to the second conveyance portion 26 by pushing away the protection curtain 54 with the second conveyance assisting apparatus 134 and is conveyed to downstream of the second conveyance portion 26.

Here, an example is explained in which the push-in section 80 explained in the first modification of the first embodiment is used as the first conveyance assisting apparatus 34 and the push-in section 160 explained in the second embodiment is used as the second conveyance assisting apparatus 134. The push-in section 60 explained in the first embodiment may be used as the first conveyance assisting apparatus 34, and the push-in section 180 explained in the third embodiment may be used as the second conveyance assisting apparatus 134.

According to the present embodiment, it is possible to provide the conveyance assisting apparatus 34 and the radiation inspection system 24 capable of preventing a package from staying in the entrance 50a of the radiation inspection apparatus 32. According to the present embodiment, it is possible to provide the conveyance assisting apparatus 134 and the radiation inspection system 24 capable of preventing a package from staying in the exit 50b of the radiation inspection apparatus 32.

### (Fifth Embodiment)

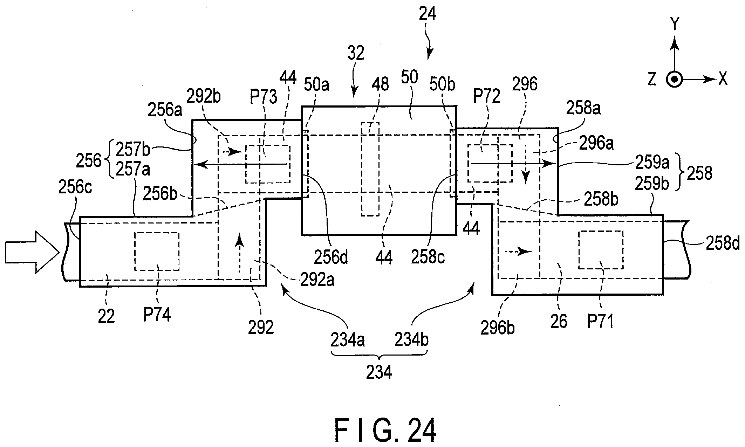

A fifth embodiment is explained with reference to FIG. 24. The present embodiment is a modification of the first to fourth embodiments including the modifications. The present embodiment is a modification of the first embodiment. The same members or members having the same functions as the members explained in the first embodiment to the fourth embodiment are denoted by the same reference numerals and signs as much as possible and explanation of the members is omitted.

As illustrated in FIG. 24, in the radiation inspection system 24 of the present embodiment, the protection curtains (the obstacles) 52 and 54 arranged in the entrance 50a and the exit 50b of the shielding box 50 explained in the first embodiment are removed. The protection curtains 52 and 54 of the entrance 50a and the exit 50b of the shielding box 50 can be removed. Accordingly, in the present embodiment as well, the publicly-known radiation inspection apparatus 32 can be used. In the present embodiment, it is also possible to use a new radiation inspection apparatus 32.

The radiation inspection system 24 includes a radiation inspection apparatus 32 and a conveyance apparatus 234. The conveyance apparatus 234 includes a first conveyance apparatus (an upstream-side conveyance portion) 234a and a second conveyance apparatus (a downstream-side conveyance portion) 234b.

The first conveyance apparatus 234a is present between a first conveyance portion 22 and the radiation inspection apparatus 32. The first conveyance apparatus 234a conveys a package conveyed in the first conveyance portion 22 toward a conveyor 44 of the radiation inspection apparatus 32. The second conveyance apparatus 234b is present between the radiation inspection apparatus 32 and a second conveyance portion 26. The second conveyance apparatus 234b takes out a package having passed the radiation inspection apparatus 32 from the conveyor 44 of the radiation inspection apparatus 32 and conveys the package toward the second conveyance portion 26.

The first conveyance apparatus 234a includes an upstream-side box (an upstream-side shielding body) 256 and a conveyance path 292 on the upstream side that shifts a conveyance direction of a package with respect to a conveyance direction D (a radiation leaking direction in the entrance 50a of the shielding box 50) of the conveyor (a conveyance path) 44 of the radiation inspection apparatus 32. Here, the conveyance path 292 is an example of a conveyance path that shifts the conveyance direction of the package in a horizontal plane.

The upstream-side box (a first shielding body) 256 is formed in a tunnel shape like the shielding box 50. Like the shielding box 50, the upstream-side box 256 is formed of, for example, a plurality of layers of iron plates having an appropriate thickness in order to prevent radiation from leaking to the outside. The upstream-side box 256 extends to the upstream side from the entrance 50a of the shielding box 50.

The upstream-side box 256 includes an upstream-side region 257a and a downstream-side region 257b. The upstream-side region 257a covers downstream including the downstream-side end portion of the first conveyance portion 22 and a first conveyance body 292a of the conveyance path 292. The downstream-side region 257b covers downstream including the downstream-side end portion of the first conveyance body 292a of the conveyance path 292, a second conveyance body 292b, and upstream including the upstream-side end portion of the conveyor 44 of the radiation inspection apparatus 32. The upstream-side box 256 includes a shielding section (an upstream-side shielding section) 256a and an opening 256b. The boundary between the upstream-side region 257a and the downstream-side region 257b is, for example, the position of the opening 256b. The upstream-side region 257a of the upstream-side box 256 includes an opening 256c serving as an entrance of the upstream-side box 256. The downstream-side region 257b of the upstream-side box 256 includes an opening 256d serving as an exit of the upstream-side box 256 in a position opposed to the shielding section 256a. Note that, in FIG. 24, a broken line indicating the opening 256b is drawn in a state of being inclined with respect to the X-axis. However, the opening 256b may be drawn as a broken line parallel to the X-axis.

The shielding section 256a is present on an extension line of the conveyance direction D of the conveyor (the conveyance path) 44 of the radiation inspection apparatus 32. The shielding section 256a is formed as a wall surface on the upstream side in the conveyance direction D of the conveyor 44 of the radiation inspection apparatus 32. The shielding section 256a blocks radiation that can leak from the inner side of the shielding box 50 through the entrance 50a of the shielding box 50. The shielding section 256a only has to have, on the upstream side in the conveyance direction D, an appropriate surface that crosses the X-axis and blocks radiation. The shielding section 256a is formed as, for example, a surface parallel to a YZ-plane orthogonal to the X-axis parallel to the conveyance direction D.

The opening 256b is present between the shielding section 256a and the conveyor 44 of the radiation inspection apparatus 32 and is opened in a direction different from the conveyance direction D of the conveyor 44 of the radiation inspection apparatus 32. In an example illustrated in FIG. 24, the opening 256b penetrates in the Y-axis direction.

The conveyance path 292 is pierced through the opening 256b. The conveyance path 292 is present between the downstream-side end portion of the first conveyance portion 22 and the upstream-side end portion of the conveyor 44 of the radiation inspection apparatus 32. The conveyance path 292 includes, for example, a first conveyance body (a main conveyance portion) 292a that moves, for example, along the Y-axis direction, a package conveyed along the first conveyance portion 22 parallel to the X-axis and a second conveyance body (a connection conveyance portion) 292b that moves, for example, along the X-axis direction, the package conveyed by the first conveyance body 292a and delivers the package to the conveyor 44 of the radiation inspection apparatus 32. The first conveyance body 292a conveys a package (a test object) in a conveyance direction deviating with respect to the conveyance direction D of the conveyor (the conveyance path) 44 toward the conveyor (the conveyance path) 44 of the radiation inspection apparatus 32. In the present embodiment, a path between the upstream-side end portion of the conveyance surface 45 of the conveyor 44 of the radiation inspection apparatus 32 and the downstream-side end portion of the conveyance surface of the first conveyance portion 22 is present substantially at the same height. The conveyance direction of the first conveyance body (the main conveyance portion) 292a only has to cross the conveyance direction of the first conveyance portion 22 on the upstream side with respect to the first conveyance body 292a. The conveyance direction of the first conveyance body (the main conveyance portion) 292a and the conveyance direction of the second conveyance body (the connection conveyance portion) 292b only have to cross each other. In the present embodiment, by the first conveyance body 292a and the second conveyance body 292b, the package conveyed by the first conveyance portion 22 is bent in a substantially L shape in a horizontal plane (an XY-plane) and delivered to the conveyor 44 of the radiation inspection apparatus 32. In the present embodiment, at the downstream-side end portion of the first conveyance portion 22 and the upstream-side end portion of the conveyor 44 of the radiation inspection apparatus 32, the conveyance direction of the conveyance surface of the first conveyance portion 22 is shifted in the Y-axis direction but is a direction parallel to the conveyance direction D of the conveyance surface 45 of the conveyor 44 of the radiation inspection apparatus 32.

The upstream-side box 256 in the present embodiment is formed to cover up to the downstream-side end portion of the first conveyance portion 22. The first conveyance portion 22 is shifted in the Y-axis direction from the shielding section 256a of the upstream-side box 256 and extends to the upstream side through the opening 256c penetrating in the X-axis direction.

The second conveyance apparatus 234b includes a downstream-side box (a downstream-side shielding body) 258 and a conveyance path 296 on the downstream side that shifts a conveyance direction of a package with respect to the conveyance direction D of the conveyor 44 of the radiation inspection apparatus 32 (a radiation leaking direction in the exit 50b of the shielding box 50). Here, the conveyance path 296 is an example of a conveyance path that shifts the conveyance direction of the package in a horizontal plane.

The downstream-side box (a second shielding body) 258 is formed in a tunnel shape like the shielding box 50 and the upstream-side box 256. Like the shielding box 50 and the upstream-side box 256, the downstream-side box 258 is formed of, for example, a plurality of layers of iron plates having an appropriate thickness in order to prevent radiation from leaking to the outside. The downstream-side box 258 extends to the downstream side from the exit 50b of the shielding box 50.

The downstream-side box 258 includes an upstream-side region 259a and a downstream-side region 259b. The upstream-side region 259a covers downstream including the downstream-side end portion of the conveyor 44 of the radiation inspection apparatus 32 and a first conveyance body 296a (a third conveyance body) of the conveyance path 296. The downstream-side region 259b covers downstream of the first conveyance body 296a of the conveyance path 296, a second conveyance body (a fourth conveyance body) 296b, and upstream including the upstream-side end portion of the second conveyance portion 26. The downstream-side box 258 includes a shielding section (a downstream-side shielding section) 258a and an opening 258b. The boundary between the upstream-side region 259a and the downstream-side region 259b is, for example, the position of the opening 258b. The upstream-side region 259a of the downstream-side box 258 includes an opening 258c serving as an entrance of the downstream-side box 258. The opening 258c is present in a position opposed to the shielding section 258a. The downstream-side region 259b of the downstream-side box 258 includes an opening 258d serving as an exit of the downstream-side box 258.

The shielding section 258a is present on an extension line of the conveyance direction D of the conveyor (the conveyance path) 44 of the radiation inspection apparatus 32. The shielding section 258a is formed as a wall surface on the downstream side in the conveyance direction D of the conveyor 44 of the radiation inspection apparatus 32. The shielding section 258a blocks radiation that can leak from the inner side of the shielding box 50 through the exit 50b of the shielding box 50. The shielding section 258a only has to have, on the downstream side in the conveyance direction D, an appropriate surface that crosses the X-axis and blocks radiation. The shielding section 258a is formed as, for example, a surface parallel to a YZ-plane orthogonal to the X-axis parallel to the conveyance direction D.

The opening 258b is present between the conveyor 44 of the radiation inspection apparatus 32 and the shielding section 258a and is opened in a direction different from the conveyance direction D of the conveyor 44 of the radiation inspection apparatus 32. In an example illustrated in FIG. 24, the opening 258b penetrates in the Y-axis direction.

The conveyance path 296 is inserted through the opening 258b. The conveyance path 296 is present between the upstream-side end portion of the conveyor 44 of the radiation inspection apparatus 32 and the upstream-side end portion of the second conveyance portion 26. The conveyance path 296 includes, for example, the first conveyance body (a main conveyance portion) 296a that moves, for example, along the Y-axis direction, a package conveyed along the conveyor 44 of the radiation inspection apparatus 32 parallel to the X-axis and the second conveyance body (a connection conveyance portion) 296b that moves, for example, along the X-axis direction, the package conveyed by the first conveyance body 296a and delivers the package to the second conveyance portion 26. The first conveyance body 296a conveys a package (a test object) in a conveyance direction deviating with respect to the conveyance direction D of the conveyor (the conveyance path) 44 of the radiation inspection apparatus 32. In the present embodiment, a path between the downstream-side end portion of the conveyance surface 45 of the conveyor 44 of the radiation inspection apparatus 32 and the upstream-side end portion of the conveyance surface of the second conveyance portion 26 is present substantially at the same height. The conveyance direction of the first conveyance body 296a only has to cross the conveyance direction of the second conveyance portion 26 on the downstream side with respect to the first conveyance body 296a. The conveyance direction of the first conveyance body 296a and the conveyance direction of the second conveyance body 296b only have to cross each other. In the present embodiment, by the first conveyance body 296a and the second conveyance body 296b, a package conveyed by the conveyor 44 of the radiation inspection apparatus 32 is bent in a substantially L shape in the horizontal plane (the XY-plane) and delivered to the second conveyance portion 26. In the present embodiment, at the downstream-side end portion of the conveyor 44 of the radiation inspection apparatus 32 and the upstream-side end portion of the second conveyance portion 26, the conveyance direction of the conveyance surface of the second conveyance portion 26 deviates in the Y-axis direction but is a direction parallel to the conveyance direction D of the conveyance surface 45 of the conveyor 44 of the radiation inspection apparatus 32.

The downstream-side box 258 of the present embodiment is formed to cover up to the upstream-side end portion of the second conveyance portion 26. The second conveyance portion 26 deviates in the Y-axis direction from the shielding section 258a of the downstream-side box 258 and extends to the downstream side through the opening 258d penetrating in the X-axis direction.

Action of the radiation inspection system 24 of the package processing system 10 is explained.

A package conveyed to the radiation inspection system 24 by the first conveyance portion 22 is put in the upstream-side box 256 through the opening 256c of the upstream-side box 256. When the package is delivered from the first conveyance portion 22 to the first conveyance body 292a of the conveyance path 292, the conveyance direction is changed from the X-axis direction to the Y-axis direction by the first conveyance body 292a. Further, when the package is delivered from the first conveyance body 292a to the second conveyance body 292b, the conveyance direction is changed from the Y-axis direction to the X-axis direction by the second conveyance body 292b. The package is delivered from the second conveyance body 292b of the conveyance path 292 to the conveyor 44 of the radiation inspection apparatus 32. Accordingly, the package draws a substantially L-shaped track and is delivered from the first conveyance portion 22 to the conveyor 44 of the radiation inspection apparatus 32.

The package delivered to the conveyor 44 of the radiation inspection apparatus 32 receives radiation from the radiation generator 46 in the shielding box 50 of the radiation inspection apparatus 32 and is subjected to radiation inspection. At this time, the radiation can leak from the entrance 50a and the exit 50b of the shielding box 50 to the outer side of the shielding box 50. The radiation leaking from the entrance 50a of the shielding box 50 is blocked in the upstream-side box 256 between the entrance 50a of the shielding box 50 and the shielding section 256a. The radiation leaking from the exit 50b of the shielding box 50 is blocked in the downstream-side box 258 between the exit 50b of the shielding box 50 and the shielding section 258a.

As explained above, the radiation inspection system 24 according to the present embodiment can prevent radiation from leaking to the outer side of the shielding box 50 by using the first conveyance apparatus 234a and the second conveyance apparatus 234b instead of the protection curtains 52 and 54.

Note that the package conveyed to the conveyor 44 of the radiation inspection system 24 and inspected is delivered from the downstream-side end portion of the conveyor 44 of the radiation inspection system 24 to the first conveyance body 296a of the conveyance path 296. The conveyance direction is changed from the X-axis direction to the Y-axis direction. The package is delivered from the first conveyance body 296a to the second conveyance body 296b of the conveyance path 296. The conveyance direction is changed from the Y-axis direction to the X-axis direction. The package is delivered from the downstream-side end portion of the second conveyance body 296b to the second conveyance portion 26. The package is conveyed from the second conveyance portion 26 toward the post-inspection conveyance area 16 on the downstream side.

In the radiation inspection system 24 according to the present embodiment, since the protection curtains 52 and 54 are absent in the entrance 50a and the exit 50b of the shielding box 50, a package is prevented from staying in the entrance 50a and the exit 50b of the shielding box 50. The radiation inspection system 24 can execute radiation inspection on packages in the order of conveyance by the first conveyance portion 22 (in the order of P71, P72, P73, and P74) as it is.

The first conveyance apparatus 234a according to the present embodiment uses the conveyor (the conveyance path) 44 together with the radiation inspection apparatus 32 that irradiates a package (a test object) conveyed in the predetermined conveyance direction D with radiation to inspect the package. The first conveyance apparatus 234a includes the upstream-side box (the shielding body on the upstream side) 256 extending to the upstream side from the radiation inspection apparatus 32 in the conveyance direction D and the conveyance path 292 on the upstream side. The upstream-side box 256 includes the shielding section 256a on the upstream side that is present on the upstream side in the conveyance direction D of the conveyor (the conveyance path) 44 and blocks radiation that can leak from the inner side of the radiation inspection apparatus 32 through the entrance 50a of the radiation inspection apparatus 32 and the opening 256b that is present between the shielding section 256a on the upstream side and the conveyor (the conveyance path) 44 of the radiation inspection apparatus 32 and is opened in a direction different from the conveyance direction D. The conveyance path 292 conveys a package from the outer side to the inner side of the upstream-side box 256 through the opening 256b of the upstream-side box 256.

The second conveyance apparatus 234b according to the present embodiment uses the conveyor (the conveyance path) 44 together with the radiation inspection apparatus 32 that irradiates a package (a test object) conveyed in the predetermined conveyance direction D with radiation to inspect the package. The second conveyance apparatus 234b includes the downstream-side box (the shielding body on the downstream side) 258 extending to the downstream side from the radiation inspection apparatus 32 in the conveyance direction D and the conveyance path 296 on the downstream side. The second conveyance apparatus 234b includes the shielding section 258a on the downstream side that is present on the downstream side in the conveyance direction D of the conveyor (the conveyance path) 44 and blocks radiation that can leak from the inner side of the radiation inspection apparatus 32 through the exit 50b of the radiation inspection apparatus 32 and the opening 258b present between the shielding section 258a on the downstream side and the conveyor 44 of the radiation inspection apparatus 32 and opened in a direction different from the conveyance direction D. The conveyance path 296 conveys a package from the inner side to the outer side of the downstream-side box 258 through the opening 258b of the downstream-side box 258.

As explained above, according to the present embodiment, it is possible to provide the first conveyance apparatus 234a and the radiation inspection system 24 capable of preventing a package from staying in the entrance 50a of the radiation inspection apparatus 32. According to the present embodiment, it is possible to provide the second conveyance apparatus 234b and the radiation inspection system 24 capable of preventing a package from staying in the exit 50b of the radiation inspection apparatus 32.

### (First modification)

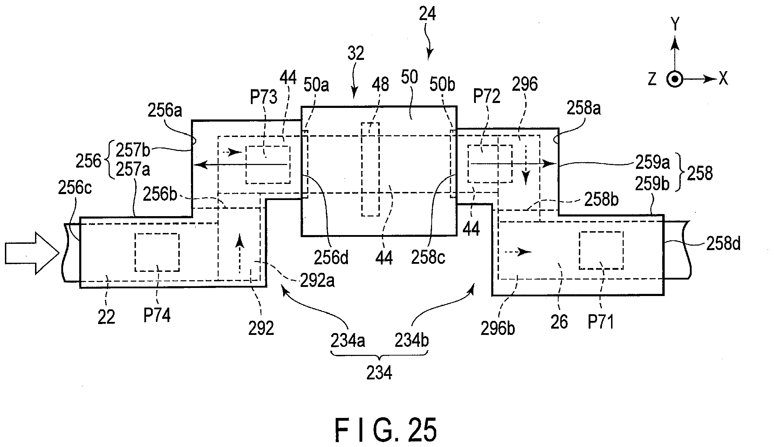

A first modification of the fifth embodiment is explained with reference to FIG. 25. In the present modification, the length of the conveyor 44 extending in a state of projecting to the upstream side and the downstream side with respect to the shielding box (the tunnel) 50 of the radiation inspection apparatus 32 is set larger compared with the example illustrated in FIG. 24.

The first conveyance apparatus 234a includes the upstream-side box (the shielding body) 256 and the conveyance path 292 on the upstream side that shifts a conveyance direction of a package with respect to the conveyance direction D of the conveyor 44 of the radiation inspection apparatus 32 (the radiation leaking direction in the entrance 50a of the shielding box 50). In the present modification, the conveyance direction of the conveyance path 292 is along the Y-axis direction.

The second conveyance apparatus 234b includes the downstream-side box (the shielding body) 258 and the conveyance path 296 on the downstream side that shifts a conveyance direction of a package with respect to the conveyance direction D of the conveyor 44 of the radiation inspection apparatus 32 (the radiation leaking direction in the exit 50b of the shielding box 50). In the present modification, the conveyance direction of the conveyance path 296 on the downstream side is along the Y-axis direction.

Action of the radiation inspection system 24 of the package processing system 10 is explained.

A package conveyed to the radiation inspection system 24 by the first conveyance portion 22 is delivered to the conveyance path 292 from the downstream-side end portion of the first conveyance portion 22. The conveyance path 292 directs the conveyance direction of the package along the X-axis direction to the Y-axis direction. The package is delivered from the downstream-side end portion of the conveyance path 292 to the conveyor 44 of the radiation inspection apparatus 32. The conveyor 44 of the radiation inspection apparatus 32 directs the conveyance direction of the package along the Y-axis direction to the conveyance direction D (the X-axis direction) of the conveyor 44 of the radiation inspection apparatus 32.

The package delivered to the conveyor 44 of the radiation inspection apparatus 32 receives radiation from the radiation generator 46 in the shielding box 50 of the radiation inspection apparatus 32 and is subjected to radiation inspection. At this time, the radiation can leak from the entrance 50a and the exit 50b of the shielding box 50. The radiation leaking from the entrance 50a of the shielding box 50 is blocked in the upstream-side box 256 between the entrance 50a of the shielding box 50 and the shielding section 256a. The radiation leaking from the exit 50b of the shielding box 50 is blocked in the downstream-side box 258 between the exit 50b of the shielding box 50 and the shielding section 258a.

As explained above, the radiation inspection system 24 according to the present modification can prevent radiation from leaking to the outer side of the shielding box 50 by using the first conveyance apparatus 234a and the second conveyance apparatus 234b instead of the protection curtains 52 and 54.

Note that the package conveyed to the conveyor 44 of the radiation inspection system 24 and inspected is delivered from the downstream-side end portion of the conveyor 44 of the radiation inspection system 24 to the conveyance path 296. The conveyance path 296 directs the conveyance direction of the package along the conveyance direction D of the conveyor 44 of the radiation inspection apparatus 32 to the Y-axis direction. The package is delivered to the second conveyance portion 26 in the downstream-side end portion of the conveyance path 296. The second conveyance portion 26 directs the conveyance direction of the package along the Y-axis direction to the X-axis direction. The package is conveyed from the second conveyance portion 26 toward the post-inspection conveyance area 16 on the downstream side.

In the radiation inspection system 24 according to the present modification, since the protection curtains 52 and 54 are absent in the entrance 50a and the exit 50b of the shielding box 50, a package is prevented from staying in the entrance 50a and the exit 50b of the shielding box 50. The radiation inspection system 24 can execute radiation inspection for packages in the order of conveyance by the first conveyance portion 22 (in the order of P71, P72, and P73) as it is.

As explained above, according to the present modification, it is possible to provide the first conveyance apparatus 234a and the radiation inspection system 24 capable of preventing a package from staying in the entrance 50a of the radiation inspection apparatus 32. According to the present modification, it is possible to provide the second conveyance apparatus 234b and the radiation inspection system 24 capable of preventing a package from staying in the exit 50b of the radiation inspection apparatus 32.

### (Second modification)

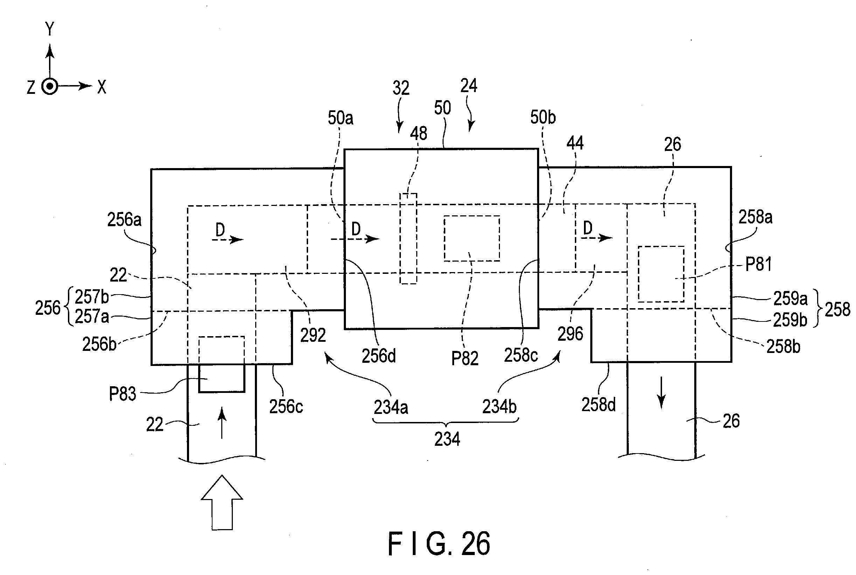

A second modification of the fifth embodiment is explained with reference to FIG. 26.

In the present modification, the radiation inspection system 24 between the first conveyance portion (the upstream-side conveyance portion) 22 and the second conveyance portion 26 is formed in a substantially U shape or a substantially C shape. In the present modification, the conveyance direction of the first conveyance portion 22 is not along the X-axis direction but along the Y-axis direction. The conveyance direction of the second conveyance portion 26 is not along the X-axis direction but along the Y-axis direction.

The first conveyance apparatus 234a includes the upstream-side box (the shielding body) 256 and the conveyance path 292 on the upstream side that shifts a conveyance direction of a package with respect to the conveyance direction D of the conveyor 44 of the radiation inspection apparatus 32 (the radiation leaking direction in the entrance 50a of the shielding box 50). In the present modification, the conveyance direction of the conveyance path 292 is along the X-axis direction.

The second conveyance apparatus 234b includes the downstream-side box (the shielding body) 258 and the conveyance path 296 on the downstream side that shifts a conveyance direction of a package with respect to the conveyance direction D of the conveyor 44 of the radiation inspection apparatus 32 (the radiation leaking direction in the exit 50b of the shielding box 50). In the present modification, the conveyance direction of the conveyance path 296 is along the X-axis direction.

Action of the radiation inspection system 24 of the package processing system 10 is explained.

A package conveyed to the radiation inspection system 24 by the first conveyance portion 22 is delivered from the downstream-side end portion of the first conveyance portion 22 on the conveyance path 292. The conveyance path 292 directs a conveyance direction of the package along the Y-axis direction to the conveyance direction D (the X-axis direction) of the conveyor 44 of the radiation inspection apparatus 32. The package is delivered from the conveyance path 292 to the conveyor 44 of the radiation inspection apparatus 32.

The package delivered to the conveyor 44 of the radiation inspection apparatus 32 receives radiation from the radiation generator 46 in the shielding box 50 of the radiation inspection apparatus 32 and is subjected to radiation inspection. At this time, the radiation can leak from the entrance 50a and the exit 50b of the shielding box 50. The radiation leaking from the entrance 50a of the shielding box 50 is blocked in the upstream-side box 256 between the entrance 50a of the shielding box 50 and the shielding section 256a. The radiation leaking from the exit 50b of the shielding box 50 is blocked in the downstream-side box 258 between the exit 50b of the shielding box 50 and the shielding section 258a.

As explained above, the radiation inspection system 24 according to the present modification can prevent radiation from leaking to the outer side of the shielding box 50 by using the first conveyance apparatus 234a and the second conveyance apparatus 234b instead of the protection curtains 52 and 54.

Note that the package conveyed to the conveyor 44 of the radiation inspection system 24 and inspected is delivered from the downstream-side end portion of the conveyor 44 of the radiation inspection system 24 to the upstream-side end portion of the conveyance path 296. The package is delivered to the second conveyance portion 26 in the downstream-side end portion of the conveyance path 296. The second conveyance portion 26 directs the conveyance direction of the package along the conveyance direction D of the conveyor 44 of the radiation inspection apparatus 32 to the Y-axis direction. The package is conveyed from the second conveyance portion 26 toward the post-inspection conveyance area 16 on the downstream side.

In the radiation inspection system 24 according to the present modification, since the protection curtains 52 and 54 are absent in the entrance 50a and the exit 50b of the shielding box 50, a package is prevented from staying in the entrance 50a and the exit 50b of the shielding box 50. The radiation inspection system 24 can execute radiation inspection for packages in the order of conveyance by the first conveyance portion 22 (in the order of P81, P82, and P83) as it is.

Although the conveyance direction of the first conveyance portion 22 and the conveyance direction of the second conveyance portion 26 are opposite to each other, the conveyance direction of the first conveyance portion 22 and the conveyance direction of the second conveyance portion 26 may be parallel to each other and the same direction.

When the first conveyance portion 22 and the conveyor 44 of the radiation inspection apparatus 32 can be set adjacent to each other, the conveyance path 292 on the upstream side can be unnecessary. When the conveyor 44 of the radiation inspection apparatus 32 and the second conveyance portion 26 can be set adjacent to each other, the conveyance path 296 on the downstream side can be unnecessary.

As explained above, according to the present modification, it is possible to provide the first conveyance apparatus 234a and the radiation inspection system 24 capable of preventing a package from staying in the entrance 50a of the radiation inspection apparatus 32. According to the present modification, it is possible to provide the second conveyance apparatus 234b and the radiation inspection system 24 capable of preventing a package from staying in the exit 50b of the radiation inspection apparatus 32.

### (Third modification)

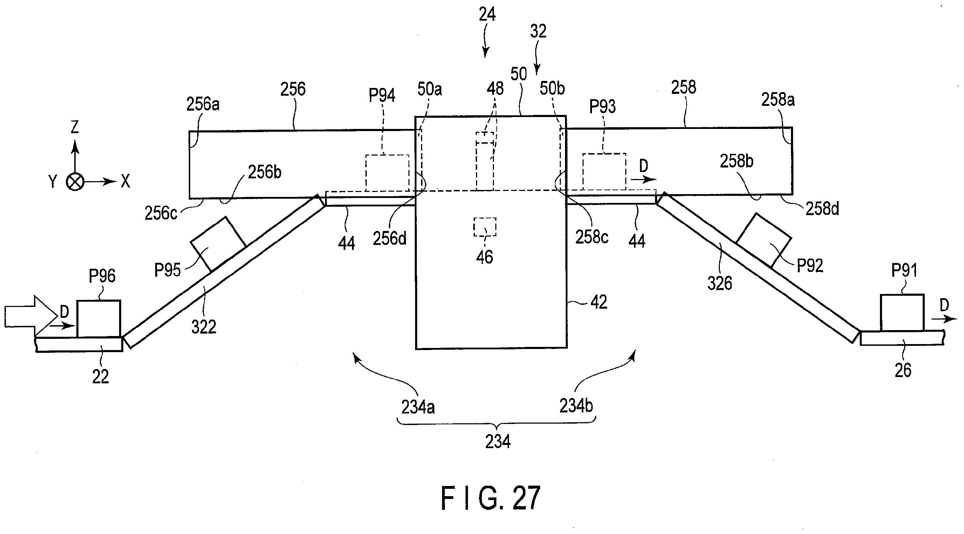

A third modification of the fifth embodiment is explained with reference to FIG. 27.

The radiation inspection system 24 includes the radiation inspection apparatus 32, the first conveyance apparatus 234a, and the second conveyance apparatus 234b.

The first conveyance apparatus 234a includes the upstream-side box (the shielding body) 256 and a conveyance portion 322 on the upstream side that shifts a conveyance direction of a package with respect to the conveyance direction D of the conveyor 44 of the radiation inspection apparatus 32 (the radiation leaking direction in the entrance 50a of the shielding box 50). Here, the conveyance portion 322 is an example of a conveyance portion that shifts the conveyance direction of the package in the up-down direction.

The upstream-side box 256 includes a shielding section 256a and an opening 256b as described in the fifth embodiment. In the present modification, the opening 256b penetrates in the Z-axis direction. The conveyance portion 322 is inserted through the opening 256b.

Here, the first conveyance portion 22 deviates to the lower side in the Z-axis direction from the shielding section 256a of the upstream-side box 256. The downstream-side end portion of the first conveyance portion 22 is present on the upstream side in the X-axis direction with respect to the upstream-side end portion of the conveyor 44 of the radiation inspection apparatus 32. A conveyance direction of the first conveyance portion 22 and a conveyance direction of the conveyor 44 of the radiation inspection apparatus 32 are parallel to the X-axis but deviate in the Z-axis direction. The conveyance portion 322 is present between the downstream-side end portion of the first conveyance portion 22 and the upstream-side end portion of the conveyor 44 of the radiation inspection apparatus 32. Accordingly, the conveyance portion 322 is inclined to rise from the upstream side toward the downstream side. The height of the conveyance surface of the first conveyance portion 22 is set closer to the height of the conveyance surface 45 of the conveyor 44 of the radiation inspection apparatus 32 as the conveyance surface is closer to the conveyor 44 of the radiation inspection apparatus 32.

The second conveyance apparatus 234b includes the downstream-side box (the shielding body) 258 and a conveyance portion 326 on the downstream side that shifts a conveyance direction of a package with respect to the conveyance direction D of the conveyor 44 of the radiation inspection apparatus 32 (the radiation leaking direction in the exit 50b of the shielding box 50). Here, the conveyance portion 326 is an example of a conveyance portion that shifts the conveyance direction of the package in the up-down direction.

The downstream-side box 258 includes the shielding section 258a and the opening 258b as explained in the fifth embodiment. In the present modification, the opening 258b penetrates in the Z-axis direction. The conveyance portion 326 is inserted through the opening 258b.

Here, the second conveyance portion 26 deviates to the lower side in the Z-axis direction from the shielding section 258a of the downstream-side box 258. The upstream-side end portion of the second conveyance portion 26 is present on the downstream side in the X-axis direction with respect to the downstream-side end portion of the conveyor 44 of the radiation inspection apparatus 32. A conveyance direction of the conveyor 44 of the radiation inspection apparatus 32 and a conveyance direction of the second conveyance portion 26 are parallel to the X-axis but deviate in the Z-axis direction. The conveyance portion 326 is present between the downstream-side end portion of the conveyor 44 of the radiation inspection apparatus 32 and the upstream-side end portion of the second conveyance portion 26. Accordingly, the conveyance portion 326 is inclined to lower from the upstream side toward the downstream side. The height of the conveyance surface of the second conveyance portion 26 is set closer to the height of the conveyance surface 45 of the conveyor 44 of the radiation inspection apparatus 32 as the conveyance surface is closer to the conveyor 44 of the radiation inspection apparatus 32.

Action of the radiation inspection system 24 of the package processing system 10 is explained.

A package conveyed to the radiation inspection system 24 by the first conveyance portion 22 is delivered from the downstream-side end portion of the first conveyance portion 22 to the upstream-side end portion of the conveyance portion 322. The conveyance portion 322 puts the package in the upstream-side box 256 through the opening 256b of the upstream-side box 256. When the package is delivered from the first conveyance portion 22 to the conveyance portion 322, a conveyance direction of the package deviating in the Z-axis direction is gradually brought close to the conveyance direction D of the conveyor 44 of the radiation inspection apparatus 32. The package is delivered from the conveyance portion 322 to the conveyor 44 of the radiation inspection apparatus 32. Accordingly, the package is delivered from the first conveyance portion 22 to the conveyor 44 of the radiation inspection apparatus 32.

The package delivered to the conveyor 44 of the radiation inspection apparatus 32 receives radiation from the radiation generator 46 in the shielding box 50 of the radiation inspection apparatus 32 and is subjected to radiation inspection. At this time, the radiation can leak from the entrance 50a and the exit 50b of the shielding box 50. The radiation leaking from the entrance 50a of the shielding box 50 is blocked in the upstream-side box 256 between the entrance 50a of the shielding box 50 and the shielding section 256a. The radiation leaking from the exit 50b of the shielding box 50 is blocked in the downstream-side box 258 between the exit 50b of the shielding box 50 and the shielding section 258a.

As explained above, the radiation inspection system 24 according to the present modification can prevent radiation from leaking to the outer side of the shielding box 50 by using the first conveyance apparatus 234a and the second conveyance apparatus 234b instead of the protection curtains 52 and 54.

Note that the package conveyed to the conveyor 44 of the radiation inspection system 24 and inspected is delivered from the downstream-side end portion of the conveyor 44 of the radiation inspection system 24 to the upstream-side end portion of the conveyance portion 326. The package is conveyed to the downstream-side end portion of the conveyance portion 326 through the opening 258b of the downstream-side box 258. At the downstream-side end portion of the conveyance portion 326, the package is delivered to the second conveyance portion 26. The package is conveyed from the second conveyance portion 26 toward the post-inspection conveyance area 16 on the downstream side.

In the radiation inspection system 24 according to the present modification, since the protection curtains 52 and 54 are absent in the entrance 50a and the exit 50b of the shielding box 50, the package is prevented from staying in the entrance 50a and the exit 50b of the shielding box 50. The radiation inspection system 24 can execute the radiation inspection for packages in the order of conveyance by the first conveyance portion 22 (in the order of P91, P92, P93, P94, P95, and P96) as it is.

As explained above, according to the present modification, it is possible to provide the first conveyance apparatus 234a and the radiation inspection system 24 capable of preventing a package from staying in the entrance 50a of the radiation inspection apparatus 32. According to the present modification, it is possible to provide the second conveyance apparatus 234b and the radiation inspection system 24 capable of preventing a package from staying in the exit 50b of the radiation inspection apparatus 32.

### (Fourth modification)

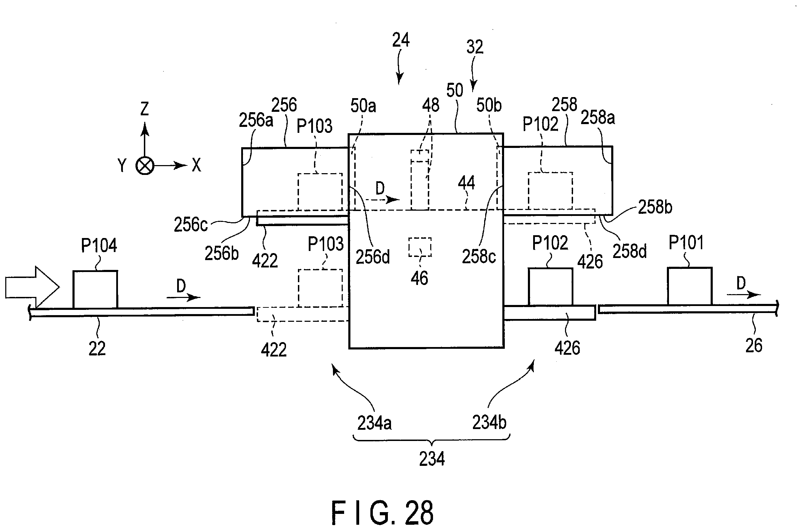

A fourth modification of the fifth embodiment is explained with reference to FIG. 28.

The radiation inspection system 24 includes the radiation inspection apparatus 32, the first conveyance apparatus 234a, and the second conveyance apparatus 234b.

The first conveyance apparatus 234a includes the upstream-side box (the shielding body) 256 and a lift on the upstream side (an upstream-side conveyance portion) 422 that shifts a conveyance direction of a package with respect to the conveyance direction D of the conveyor 44 of the radiation inspection apparatus 32 (the radiation leaking direction in the entrance 50a of the shielding box 50). In the present modification, the lift 422 on the upstream side is used instead of the conveyance portion 322 on the upstream side explained in the third modification of the fifth embodiment. The lift 422 is present on the downstream side of the first conveyance portion 22 and can move a package conveyed by the first conveyance portion 22 from the lower side to the upper side along the Z-axis. An upper surface (a conveyance surface) of the lift (conveyance portion) 422 is movable in the up-down direction. The upper surface of the lift 422 can be arranged at the same height as the conveyance surface 45 of the conveyor 44 of the radiation inspection apparatus 32. When the lift 422 is moved to the upper side, the package can be delivered to the conveyor 44 of the radiation inspection apparatus 32.

Note that the lift 422 can be disposed in a position where the package is delivered to the conveyor 44 of the radiation inspection apparatus 32 through the opening 256b penetrating in the Z-axis direction of the upstream-side box (the shielding body) 256.

Similarly, the second conveyance apparatus 234b includes the downstream-side box (the shielding body) 258 and a lift on the downstream side (a downstream-side conveyance portion) 426 that shifts a conveyance direction of a package with respect to the conveyance direction D of the conveyor 44 of the radiation inspection apparatus 32 (the radiation leaking direction in the exit 50b of the shielding box 50). In the present modification, the lift 426 on the downstream side is used instead of the conveyance portion 326 on the downstream side explained in the second modification of the fifth embodiment. The lift 426 is present on the downstream side of the conveyor 44 of the radiation inspection apparatus 32 and can move a package conveyed by the conveyor 44 of the radiation inspection apparatus 32 from the upper side to the lower side along the Z-axis. An upper surface (a conveyance surface) of the lift (the conveyance portion) 426 is movable in the up-down direction. The upper surface of the lift 426 can be disposed at the same height as the conveyance surface 45 of the conveyor 44 of the radiation inspection apparatus 32. When moved to the upper side, the lift 426 can receive the package from the conveyor 44 of the radiation inspection apparatus 32.

Note that the lift 426 can be disposed in a position where the lift 426 receives the package from the conveyor 44 of the radiation inspection apparatus 32 through the opening 258b penetrating in the Z-axis direction of the downstream-side box (the shielding body) 258.

In the radiation inspection system 24 according to the present modification, since the protection curtains 52 and 54 are absent in the entrance 50a and the exit 50b of the shielding box 50, a package is prevented from staying in the entrance 50a and the exit 50b of the shielding box 50. The radiation inspection system 24 can execute radiation inspection for packages in the order of conveyance by the first conveyance portion 22 (in the order of P101, P102, P103, and P104) as it is.

As explained above, according to the present modification, it is possible to provide the first conveyance apparatus 234a and the radiation inspection system 24 capable of preventing a package from staying in the entrance 50a of the radiation inspection apparatus 32. According to the present modification, it is possible to provide the second conveyance apparatus 234b and the radiation inspection system 24 capable of preventing a package from staying in the exit 50b of the radiation inspection apparatus 32.

### [Supplementary note]

(Supplementary note 1) A conveyance apparatus used together with a radiation inspection apparatus that is configured to irradiate a test object conveyed in a predetermined conveyance direction on a conveyance path with radiation to inspect the test object, the conveyance apparatus comprising:
a shielding body on an upstream side including:
   a shielding section that is on the upstream side in the conveyance direction of the conveyance path and is configured to block radiation that is configured to leak from an inner side of the radiation inspection apparatus through an entrance of the radiation inspection apparatus, and
   an opening that is between the shielding section on the upstream side and the conveyance path of the radiation inspection apparatus and is opened in a direction different from the conveyance direction,
   the shielding body extending to the upstream side from the radiation inspection apparatus in the conveyance direction; and
a conveyance portion that is configured to convey the test object from an outer side to an inner side of the shielding body on the upstream side through the opening of the shielding body on the upstream side.

(Supplementary note 2) A conveyance apparatus used together with a radiation inspection apparatus that is configured to irradiate a test object conveyed in a predetermined conveyance direction on a conveyance path with radiation to inspect the test object, the conveyance apparatus comprising:
a shielding body on a downstream side including:
   a shielding section that is on the downstream side in the conveyance direction of the conveyance path and is configured to block radiation that is configured to leak from an inner side of the radiation inspection apparatus through an exit of the radiation inspection apparatus, and
   an opening that is between the shielding section on the downstream side and the conveyance path of the radiation inspection apparatus and is opened in a direction different from the conveyance direction,
   the shielding body extending to the downstream side from the radiation inspection apparatus in the conveyance direction; and
a conveyance portion that is configured to convey the test object from an inner side to an outer side of the shielding body on the downstream side through the opening of the shielding body on the downstream side.
(Supplementary note 3) The conveyance apparatus according to the supplementary note 1 or 2, wherein:
   an upstream-side end portion or a downstream-side end portion of the conveyance path is adjacent to a downstream-side end portion or an upstream-side end portion of the conveyance portion, and
   an upstream-side end portion or a downstream-side end portion of a conveyance surface of the conveyance path and an upstream-side end portion or a downstream-side end portion of a conveyance surface of the conveyance portion are present at substantially same height.

(Supplementary note 4) The conveyance apparatus according to the supplementary note 1 or 2, wherein height of a conveyance surface of the conveyance portion is set closer to height of a conveyance surface of the conveyance path as the conveyance surface is closer to the conveyance path.

(Supplementary note 5) The conveyance apparatus according to the supplementary note 1 or 2, wherein the conveyance direction of a conveyance surface of the conveyance path is flush with the conveyance direction of a conveyance surface of the conveyance portion.

### (Supplementary note 6)

The conveyance apparatus according to the supplementary note 1 or 2, wherein:
a conveyance surface of the conveyance portion is movable in an up-down direction, and
the conveyance surface of the conveyance portion can be disposed at same height as a conveyance surface of the conveyance path.

(Supplementary note A) A conveyance assisting apparatus used together with a radiation inspection apparatus that is configured to irradiate a test object conveyed in a predetermined conveyance direction on a conveyance path with radiation to inspect the test object, the conveyance assisting apparatus comprising:
a push-in section that is configured to push the test object in the conveyance direction into at least one of obstacles provided in an entrance and an exit of the radiation inspection apparatus to prevent leakage of radiation.
(Supplementary note B) The conveyance assisting apparatus according to the supplementary note A, wherein the push-in section includes:
   a conveyance portion provided on an upstream side of the conveyance path of the radiation inspection apparatus and including a conveyance surface configured to convey the test object to the conveyance path; and
   one or a plurality of protrusions projecting upward from the conveyance surface.

(Supplementary note C) The conveyance assisting apparatus according to the supplementary note A or B, wherein the push-in section includes a pressing section that is provided above the conveyance path in the radiation inspection apparatus or above further on an upstream side of the conveyance path than the radiation inspection apparatus and that is movable in a direction of approaching and separating from the obstacles and a direction crossing a direction of approaching the conveyance path and a direction of separating from the conveyance path.

(Supplementary note D) A conveyance assisting apparatus used together with a radiation inspection apparatus that is configured to irradiate a test object conveyed in a predetermined conveyance direction on a conveyance path with radiation to inspect the test object, the conveyance assisting apparatus comprising:
an auxiliary conveyor portion including at least one of:
   a first auxiliary conveyor on an upstream side that is on the upstream side of the conveyance path of the radiation inspection apparatus and puts the test object toward the radiation inspection apparatus and
   a second auxiliary conveyor on a downstream side that is on the downstream side of the conveyance path of the radiation inspection apparatus and takes out the test object from the radiation inspection apparatus;
a box section including:
   an upstream-side box having a tunnel shape that extends from an entrance of the radiation inspection apparatus further to the upstream side in the conveyance direction than a downstream-side end portion of the first auxiliary conveyor on the upstream side and prevents leakage of radiation when the first auxiliary conveyor on the upstream side is present, and
   a downstream-side box having a tunnel shape that extends from an exit of the radiation inspection apparatus further to a downstream side in the conveyance direction than an upstream-side end portion of the second auxiliary conveyor on the downstream side and prevents leakage of radiation when the second auxiliary conveyor on the downstream side is present;
an obstacle including:
   an upstream-side obstacle suspended from the upstream-side box toward the first auxiliary conveyor on the upstream side above the first auxiliary conveyor on the upstream side to prevent leakage of radiation when the upstream-side box is present, and
   a downstream-side obstacle suspended from the downstream-side box toward the second auxiliary conveyor on the downstream side above the second auxiliary conveyor on the downstream side to prevent leakage of radiation when the downstream-side box is present; and
a push-in section including:
   an upstream-side push-in section that is configured to push the test object into the upstream-side obstacle on the downstream side from the upstream side with respect to the test object when the upstream-side obstacle is present in the upstream-side box, and
   a downstream-side push-in section that is configured to push the test object into the downstream-side obstacle on the upstream side to the downstream side with respect to the test object when the downstream-side obstacle is present in the downstream-side box.

(Supplementary note E) The conveyance assisting apparatus according to the supplementary note D, wherein:
the first auxiliary conveyor on the upstream side of the auxiliary conveyor portion includes an upstream-side conveyance surface that is configured to move, from the upstream side to the downstream side, the test object delivered from the first conveyance portion on the upstream side of the first auxiliary conveyor on the upstream side, and
the upstream-side push-in section of the push-in section includes one or a plurality of protrusions projecting upward from the upstream-side conveyance surface.

(Supplementary note F) The conveyance assisting apparatus according to the supplementary note D or E, wherein:
the second auxiliary conveyor on the downstream side of the auxiliary conveyor portion includes a downstream-side conveyance surface that is configured to move, from the upstream side to the downstream side, the test object delivered from the conveyance path of the radiation inspection apparatus, and
the downstream-side push-in section of the push-in section includes one or a plurality of protrusions projecting upward from the downstream-side conveyance surface.

(Supplementary note G) The conveyance assisting apparatus according to any one of the supplementary notes D to F, wherein a distance along the conveyance direction between a downstream-side end portion of the first auxiliary conveyor on the upstream side and the upstream-side obstacle is smaller compared with a distance along the conveyance direction between an upstream-side end portion of the second auxiliary conveyor on the downstream side and the downstream-side obstacle.

(Supplementary note H) The conveyance assisting apparatus according to the supplementary note D, wherein, when the first auxiliary conveyor on the upstream side and the upstream-side box are absent, the push-in section includes a pressing section that is provided above the conveyance path of the radiation inspection apparatus on the upstream side and is movable in a direction of approaching and separating from the upstream-side obstacle in the entrance of the radiation inspection apparatus configured to prevent leakage of radiation of the radiation inspection apparatus and a direction crossing a direction of approaching the conveyance path and a direction of separating from the conveyance path.

(Supplementary note I) The conveyance assisting apparatus according to the supplementary note D, wherein, when the second auxiliary conveyor on the downstream side is absent, the push-in section includes a pressing section that is provided above the conveyance path in the radiation inspection apparatus or above the radiation inspection apparatus on the downstream side and is movable in a direction of approaching and separating from an obstacle and a direction crossing a direction of approaching the conveyance path and a direction of separating from the conveyance path.

(Supplementary note J) A radiation inspection system comprising:
a radiation inspection apparatus that is configured to irradiate a test object conveyed in a predetermined conveyance direction on a conveyance path with radiation to inspect the test object; and
the conveyance assisting apparatus according to any one of the supplementary notes A to I used together with the radiation inspection apparatus.

As explained above, according to the embodiments explained above, it is possible to provide the conveyance assisting apparatuses 34 and 134, the conveyance apparatuses 234a and 234b, and the radiation inspection system 24 capable of preventing a package from staying in the entrance 50a or the exit 50b of the radiation inspection apparatus 32 such as an X-ray inspection apparatus.

While certain embodiments have been described, these embodiments have been presented by way of example only, and are not intended to limit the scope of the inventions. These novel embodiments may be embodied in various forms, and various omissions, replacements, and changes can be made thereon without departing from the spirit of the invention. The embodiments and their modifications are included in the scope and spirit of the invention and are included in the scope of the claimed inventions and their equivalents.

## Claims

1. A conveyance apparatus comprising:
an upstream-side conveyance portion that is configured to convey a test object from a conveyance direction deviating with respect to a conveyance direction of a conveyance path of a radiation inspection apparatus to the conveyance path, the radiation inspection apparatus being configured to irradiate the test object with radiation to inspect the test object; and
a downstream-side conveyance portion that is configured to convey the test object from the conveyance path in a conveyance direction deviating with respect to the conveyance direction of the conveyance path,
wherein the upstream-side conveyance portion and the downstream-side conveyance portion respectively include a shielding section that is on an extension line of the conveyance direction of the conveyance path and is configured to block the radiation.

2. The conveyance apparatus according to claim 1, wherein the conveyance direction of the upstream-side conveyance portion crosses a conveyance direction of a first conveyance portion on an upstream side with respect to the upstream-side conveyance portion.

3. The conveyance apparatus according to claim 1 or 2, wherein the upstream-side conveyance portion includes:
a first conveyance body that is configured to convey the test object in a conveyance direction deviating with respect to the conveyance direction of the conveyance path; and
a second conveyance body that connects the first conveyance body and the conveyance path.

4. The conveyance apparatus according to claim 3, wherein the conveyance direction of the first conveyance body and a conveyance direction of the second conveyance body cross.

5. The conveyance apparatus according to any one of claims 1 to 4, comprising a first shielding body that includes the shielding section,
the first shielding body extending from an entrance of the radiation inspection apparatus to an upstream side in the conveyance direction of the conveyance path, covering at least a part of the upstream-side conveyance portion, and being configured to block the radiation from the radiation inspection apparatus,
wherein the first shielding body includes an opening between the shielding section and the entrance of the radiation inspection apparatus,
the opening allowing the test object to pass from the conveyance direction deviating with respect to the conveyance direction of the conveyance path to a position along the conveyance direction of the conveyance path on an inner side of the first shielding body.

6. The conveyance apparatus according to any one of claims 1 to 5, wherein the conveyance direction of the downstream-side conveyance portion crosses a conveyance direction of a second conveyance portion on a downstream side with respect to the downstream-side conveyance portion.

7. The conveyance apparatus according to any one of claims 1 to 6, wherein the downstream-side conveyance portion includes:
a third conveyance body that is configured to convey the test object in a conveyance direction deviating with respect to the conveyance direction of the conveyance path; and
a fourth conveyance body that is configured to convey the test object in a conveyance direction deviating with respect to the conveyance direction of the third conveyance body.

8. The conveyance apparatus according to claim 7, wherein the conveyance direction of the third conveyance body and a conveyance direction of the fourth conveyance body cross.

9. The conveyance apparatus according to any one of claims 1 to 8, comprising a second shielding body that includes the shielding section,
the second shielding body extending from an exit of the radiation inspection apparatus to a downstream side in the conveyance direction of the conveyance path, covering at least a part of the downstream-side conveyance portion, and being configured to block the radiation from the radiation inspection apparatus,
wherein the second shielding body includes an opening between the shielding section and the exit of the radiation inspection apparatus,
the opening allowing the test object to pass from a position along the conveyance direction of the conveyance path on an inner side of the second shielding body to the conveyance direction deviating with respect to the conveyance direction of the conveyance path.

10. A conveyance apparatus comprising:
an upstream-side shielding section that is on an upstream side of a conveyance direction of a conveyance path of a radiation inspection apparatus that is configured to irradiate a test object with radiation to inspect the test object,
the upstream-side shielding section being configured to block the radiation that is configured to leak from an inner side of the radiation inspection apparatus through an entrance of the radiation inspection apparatus; and
an upstream-side conveyance portion that is configured to convey, in a position between the upstream-side shielding section and the conveyance path, the test object from a position deviating with respect to the conveyance direction of the conveyance path to a position along the conveyance direction of the conveyance path.

11. The conveyance apparatus according to claim 10, comprising an upstream-side shielding body that includes the upstream-side shielding section,
the upstream-side shielding body extending from the entrance of the radiation inspection apparatus to the upstream side in the conveyance direction of the conveyance path, covering at least a part of the upstream-side conveyance portion, and being configured to block the radiation from the radiation inspection apparatus,
wherein the upstream-side shielding body includes an opening between the upstream-side shielding section and the entrance of the radiation inspection apparatus,
the opening allowing the test object to pass from a conveyance direction deviating with respect to the conveyance direction of the conveyance path to a position along the conveyance direction of the conveyance path on an inner side of the upstream-side shielding body.

12. A conveyance apparatus comprising:
a downstream-side shielding section that is on a downstream side in a conveyance direction of a conveyance path of a radiation inspection apparatus that is configured to irradiate a test object with radiation to inspect the test object,
the downstream-side shielding section being configured to block radiation that is configured to leak from an inner side of the radiation inspection apparatus through an exit of the radiation inspection apparatus; and
a downstream-side conveyance portion that is configured to convey, in a position between the conveyance path and the downstream-side shielding section, the test object from a position along the conveyance direction of the conveyance path to a position deviating with respect to the conveyance direction of the conveyance path.

13. The conveyance apparatus according to claim 12, comprising a downstream-side shielding body that includes the downstream-side shielding section,
the downstream-side shielding body extending from an exit of the radiation inspection apparatus to a downstream side in the conveyance direction of the conveyance path, covering at least a part of the downstream-side conveyance portion, and being configured to block the radiation from the radiation inspection apparatus,
wherein the downstream-side shielding body includes an opening between the exit of the radiation inspection apparatus and the downstream-side shielding section,
the opening allowing the test object to pass from a position along the conveyance direction of the conveyance path on an inner side of the downstream-side shielding body to a position deviating with respect to the conveyance direction of the conveyance path.

14. A radiation inspection system comprising:
a radiation inspection apparatus that includes a conveyance path configured to convey a test object and is configured to irradiate the test object conveyed on the conveyance path with radiation to inspect the test object; and
the conveyance apparatus according to any one of claims 1 to 13.
